# EUROPÄISCHE PATENTSCHRIFT

(11) **EP 2 538 323 B1**
(45) Veröffentlichungstag und Bekanntmachung des Hinweises auf die Patenterteilung: **07.01.2015**
(21) Anmeldenummer: 12173048.5
(22) Anmeldetag: 21.06.2012
(51) Int. Cl.: G06F 9/44

(54) **Verfahren und System zur Unterstützung einer Bedienung eines Computerprogramms**
Method and system to support operation of a computer program
Procédé et système d'assistance à l'utilisation d'un programme informatique

(30) Priorität: 22.06.2011 EP 11171107
(43) Veröffentlichungstag der Anmeldung: 26.12.2012
(73) Patentinhaber: TTS Knowledge Products GmbH, 10115 Berlin (DE)
(72) Erfinder: Wulff, Gregory, 50859 Köln (DE)
(74) Vertreter: Bettinger Schneider Schramm

(56) Entgegenhaltungen:
- EP-A2- 1 437 648
- WO-A1-2008/115767
- WO-A1-2009/121880
- US-A1- 2006 026 531
- US-A1- 2006 235 736
- US-A1- 2008 195 946
- US-A1- 2009 158 205
- US-A1- 2010 205 530
- US-B1- 6 307 544

## Beschreibung

### Gebiet der Erfindung

Die Erfindung betrifft ein Verfahren und ein System zur Unterstützung eines Benutzers während einer Bedienung zumindest eines vorbestimmten Computerprogramms, wobei während der Ausführung des Computerprogramms zumindest ein Benutzeroberflächenobjekt des Computerprogramms auf einer Anzeigeeinrichtung zur Anzeige gebracht wird und wobei die Bedienung des Computerprogramms eine Anzahl auszuführender Prozessschritte umfasst.

### Hintergrund der Erfindung

Zur Unterstützung eines Benutzers während der Bedienung eines Computerprogramms oder zum Erlernen eines Computerprogramms ist es bekannt, dem Benutzer ein Handbuch zur Verfügung zu stellen. Das Handbuch kann als gedrucktes Handbuch oder als elektronisches Handbuch, etwa in Form einer in dem Computerprogramm integrierten Hilfe bereitgestellt werden. Elektronische Handbücher haben dabei den Vorteil, dass bei Anforderung der Hilfe, etwa durch Drücken der F1-Taste oder eines Hilfe-Knopfes das Computerprogramm automatisch den Hilfetext aus dem elektronischen Handbuch zur Anzeige bringen kann, welcher dem Programmkontext, in dem sich das Computerprogramm befindet, zugeordnet ist. Diese Art der Unterstützung hat allerdings den Nachteil, dass bei jedem Wechsel des Programmkontextes, etwa wenn eine neue Bildschirmmaske aufgerufen wird die Hilfe durch den Benutzer erneut angefordert werden muss, um den korrekten Hilfetext zur Anzeige zu bringen. Ein weiterer Nachteil besteht darin, dass eine interaktive Benutzerführung durch das Computerprogramm nicht möglich ist.

Zur Unterstützung einer Benutzerführung durch ein Computerprogramm ist es ferner bekannt, während der Bedienung des Computerprogramms Bildschirmobjekte, sogenannte Benutzeroberflächenobjekte, hervorzuheben, um dem Benutzer zu signalisieren, mit welchem Benutzeroberflächenobjekt eine Interaktion zu erfolgen hat. Die Unterstützung kann auch in diesem Fall etwa durch Drücken der F1-Taste oder eines Hilfe-Knopfes angefordert werden. Das hervorzuhebende Benutzeroberflächenobjekt wird anhand vorbestimmter Bezugsmerkmale, etwa die Position des Benutzeroberflächenobjektes in der Bildschirmmaske und/oder die Position des Benutzeroberflächenobjektes in einer Liste von Benutzeroberflächenobjekte lokalisiert.

Diese Form der Unterstützung hat allerdings den Nachteil, dass ein entsprechendes Benutzeroberflächenobjekt nur dann korrekt hervorgehoben werden kann, wenn sich die Bezugsmerkmale nicht ändern. Ändert sich beispielsweise die Reihenfolge der Benutzeroberflächenobjekte in der Liste von Benutzeroberflächenobjekten, wenn etwa das Computerprogramm von einem Entwicklungssystem auf ein Produktivsystem portiert wird, kann dies dazu führen, dass ein falsches Benutzeroberflächenobjekt aus der Liste ausgewählt und hervorgehoben wird, was wiederum zu einer Fehlbedienung des Computerprogramms durch den Benutzer führen kann. Ein weiterer Nachteil besteht darin, dass diese Art der Benutzerführung nicht kontextübergreifend funktioniert, sodass der Benutzer bei jedem Wechsel des Kontextes des Computerprogramms, etwa beim Wechsel von einer Eingabemaske zur nächsten Eingabemaske, die Unterstützung erneut anfordern muss.

EP 1 437 648 A2 betrifft ein Verfahren gemäß dem Oberbegriff von Anspruch 1.

### Aufgabe der Erfindung

Aufgabe der Erfindung ist es daher, ein Verfahren und ein System zur Unterstützung eines Benutzers während einer Bedienung eines Computerprogramms bereitzustellen, welche es erlauben, während der Ausführung des Computerprogramms kontextübergreifend ein Benutzeroberflächenobjekt des Computerprogramms entsprechend einem vorbestimmten Programmablauf auch bei sich ändemden Bezugsmerkmalen des Benutzeroberflächenobjektes auf einer Anzeigeeinrichtung hervorzuheben.

### Erfindungsgemäße Lösung

Diese Aufgabe wird erfindungsgemäß durch ein Verfahren und ein System zur Unterstützung eines Benutzers während einer Bedienung eines Computerprogramms insbesondere gemäß den unabhängigen Ansprüchen gelöst. Vorteilhafte Ausgestaltungen und Weiterbildungen der Erfindung ergeben sich aus den jeweiligen abhängigen Ansprüchen.

Erfindungsgemäß bereitgestellt wird demnach ein Computer-implementiertes Verfahren zur Unterstützung eines Benutzers während einer Bedienung zumindest eines vorbestimmten Computerprogramms, wobei während der Ausführung des Computerprogramms zumindest ein Benutzeroberflächenobjekt des Computerprogramms auf einer Anzeigeeinrichtung zur Anzeige gebracht wird, wobei die Bedienung des Computerprogramms eine Anzahl auszuführender Prozessschritte umfasst, welche in einer Navigationsdatei gespeichert sind, und wobei jeder Prozessschritt durch eine vorbestimmte Benutzerinteraktion mit einem vorbestimmten Benutzeroberflächenobjekt in einem vorbestimmten Kontext des Computerprogramms repräsentiert wird. Für zumindest einen in der Navigationsdatei gespeicherten Prozessschritt wird
- der aktuelle Kontext des Computerprogramms ermittelt,
- das an der Anzeigeeinrichtung angezeigte Benutzeroberflächenobjekt des Computerprogramms ermittelt, welches dem Benutzeroberflächenobjekt des Prozessschrittes entspricht, und
- das ermittelte Benutzeroberflächenobjekt des Computerprogramms auf der Anzeigeeinrichtung für den Benutzer hervorgehoben-, wobei das angezeigte Benutzeroberflächenobjekt des Computerprogramms, welches dem Benutzeroberflächenobjekt des Prozessschrittes entspricht, ermittelt wird, indem
- für alle dem aktuellen Kontext des Computerprogramms zugeordneten Benutzeroberflächenobjekte
- ermittelt wird, ob der Objekttyp des angezeigten Benutzeroberflächenobjektes des Computerprogramms mit dem Objekttyp des Benutzeroberflächenobjektes des Prozessschrittes übereinstimmt,
- falls die Objekttypen übereinstimmen, ein Übereinstimmungswert für das angezeigte Benutzeroberflächenobjekt des Computerprogramms ermittelt wird, wobei der Übereinstimmungswert für ein Benutzeroberflächenobjekt auf Basis der Objekteigenschaften des Benutzeroberflächenobjektes bestimmt wird, wobei die Objekteigenschaften des über die Objekterkennungsschnittstelle abgefragten Benutzeroberflächenobjektes mit den entsprechenden Objekteigenschaften des Benutzeroberflächenobjektes des Prozessschrittes verglichen und bewertet werden und das Benutzeroberflächenobjekt des Computerprogramms zusammen mit dem Übereinstimmungswert in einer Ergebnisliste abgespeichert wird, und
- jenes Benutzeroberflächenobjekt aus der Ergebnisliste ausgewählt wird, welches ein vorbestimmtes Auswahlkriterium erfüllt.

Vorteilhaft ist es, wenn die auszuführenden Prozessschritte in einer vorbestimmten Reihenfolge in der Navigationsdatei gespeichert sind.

Es hat sich als vorteilhaft herausgestellt, wenn vor dem Ermitteln des angezeigten Benutzeroberflächenobjekts des Computerprogramms geprüft wird, ob der aktuelle Kontext des Computerprogramms mit dem Kontext des Prozessschrittes übereinstimmt, und, falls der aktuelle Kontext des Computerprogramms nicht mit dem Kontext des Prozessschrittes übereinstimmt, eine Synchronisierung der Navigationsdatei mit dem Computerprogramm durchgeführt wird.

Damit wird in vorteilhafter Weise gewährleistet, dass jener Prozessschritt aus der Navigationsdatei ausgewählt wird, dessen Kontext mit dem Kontext des Computerprogramms übereinstimmt. Dadurch kann die Unterstützung des Benutzers an jeder Stelle im Workflow des Computerprogramms angefordert werden.

Beim Synchronisieren der Navigationsdatei mit dem Computerprogramm kann
- der nächste Prozessschritt in der Navigationsdatei ermittelt werden, sofern in der Navigationsdatei noch weitere Prozessschritte enthalten sind, und
- geprüft werden, ob der aktuelle Kontext des Computerprogramms mit dem Kontext des nächsten Prozessschrittes übereinstimmt, und, falls der aktuelle Kontext des Computerprogramms nicht mit dem Kontext des nächsten Prozessschrittes übereinstimmt, die Synchronisierung der Navigationsdatei mit dem Computerprogramm erneut durchgeführt werden.

Nach dem Ermitteln des angezeigten Benutzeroberflächenobjektes des Computerprogramms kann geprüft werden, ob sich das ermittelte Benutzeroberflächenobjekt in einem vorbestimmten Zustand befindet. Dies hat den Vorteil, dass, sofern sich das ermittelte Benutzeroberflächenobjekt bereits in dem vorbestimmten Zustand befindet, der nächste Prozessschritt aus der Navigationsdatei geladen werden kann

Vorzugsweise umfasst das Ermitteln des Übereinstimmungswertes zumindest folgende Schritte:
- für alle Objekteigenschaften des angezeigten Benutzeroberflächenobjektes des Computerprogramms, wobei jeder Objekteigenschaft ein Gewichtungsfaktor zugeordnet ist,
   - einen ersten Zähler um den der Objekteigenschaft zugeordneten Gewichtungsfaktor erhöhen, und
   - sofern die Objekteigenschaft zumindest teilweise mit der Objekteigenschaft des Benutzeroberflächenobjektes des Prozessschrittes übereinstimmt, einen zweiten Zähler anteilig um den der Objekteigenschaft zugeordneten Gewichtungsfaktor erhöhen, und
- den Übereinstimmungswert aus dem Verhältnis des ersten Zählers zum zweiten Zähler bilden.

Besonders vorteilhaft ist es, wenn das Benutzeroberflächenobjekt des Computerprogramms zusammen mit dem Übereinstimmungswert in der Ergebnisliste abgespeichert wird, sofern der ermittelte Übereinstimmungswert größer als ein vorbestimmter erster Schwellenwert ist, und wobei die Benutzeroberflächenobjekte in der Ergebnisliste in einer vorbestimmten Sortierreihenfolge, vorzugsweise absteigend sortiert nach dem Übereinstimmungswert, gespeichert werden.

Damit werden in der Ergebnisliste nur jene Benutzeroberflächenobjekte abgespeichert, welche prinzipiell für eine Auswahl bzw. ein Hervorheben an der Anzeigeeinrichtung in Frage kommen. Die Länge der Ergebnisliste wird dadurch minimiert, was hinsichtlich des Speicherplatzbedarfes besonders bei etwa Eingabemasken mit sehr vielen Benutzeroberflächenobjekten von Vorteil ist.

Das Auswählen des Benutzeroberflächenobjektes aus der Ergebnisliste kann zumindest umfassen:
- Prüfen, ob die Ergebnisliste zumindest ein Benutzeroberflächenobjekt enthält, und sofern die Ergebnisliste zumindest ein Benutzeroberflächenobjekt enthält
   - Ermitteln einer Differenz zwischen dem Übereinstimmungswert des ersten Benutzeroberflächenobjektes und des zweiten Benutzeroberflächenobjektes in der Ergebnisliste, sofern die Ergebnisliste zumindest zwei Benutzeroberflächenobjekte enthält, und
   - Prüfen, ob die Differenz einen vorbestimmten zweiten Schwellenwert überschreitet, und
- Auswählen des ersten Benutzeroberflächenobjektes aus der Ergebnisliste, sofern die Differenz den zweiten Schwellenwert überschreitet oder die Ergebnisliste genau ein Benutzeroberflächenobjekt enthält.

Dadurch wird in vorteilhafter Weise vermieden, dass bei sehr ähnlichen Benutzeroberflächenobjekten das falsche Benutzeroberflächenobjekt zum Zwecke des Hervorhebens an der Anzeigeeinrichtung ausgewählt wird.

Es hat sich als Vorteilhaft erwiesen, wenn das Hervorheben des ermittelten Benutzeroberflächenobjektes des Computerprogramms an der Anzeigeeinrichtung zumindest folgende Schritte umfasst:
- Erzeugen einer Bildschirmkopie der Anzeigeeinrichtung in Form eines Bitmaps,
- Reduzieren der Helligkeit des Bitmaps,
- Erzeugen eines ersten Bildschirmregionsobjektes, welches den gesamten Bildschirm repräsentiert,
- Erzeugen eines zweiten Bildschirmregionsobjektes, welches den optisch hervorzuhebenden Bereich des Bildschirms repräsentiert,
- Entfernen des zweiten Bildschirmregionsobjektes von dem ersten Bildschirmregionsobjekt, und
- Erzeugen eines Bildschirmfensters, welches der Form des ersten Bildschirmregionsobjekt entspricht und Anzeigen des Bildschirmfensters auf der Anzeigeeinrichtung.

In einer Ausgestaltung der Erfindung kann eine Benutzerinteraktion entgegengenommen werden und die entgegengenommene Benutzerinteraktion anhand von Regeln, welche der Benutzerinteraktion des Prozessschrittes zugeordnet sind, validiert werden, wobei das Entgegennehmen und Validieren der Benutzerinteraktion zumindest folgende Schritte umfasst:
- Erzeugen eines Systemhooks zum Abfangen von Benutzeingaben, bevor diese an das Computerprogramm weitergegeben werden,
- für jede Benutzeingabe, welche von dem Systemhook abgefangen wird
   - Überprüfen, ob der Aktionstyp der Benutzereingabe dem Aktionstyp des Prozessschrittes entspricht,
   - sofern die Aktionstypen einander entsprechen, Validieren der Benutzereingabe, wobei bei der Validierung der Benutzereingabe unterschieden wird zwischen einer Zeiger basierten Benutzereingabe und einer Tastatur basierten Benutzereingabe, wobei
      - bei einer Zeiger basierten Benutzereingabe überprüft wird, ob die Eingabe von dem Benutzeroberflächenobjekt des Prozessschrittes entgegengenommen wurde,
      - bei einer Tastatur basierten Benutzereingabe überprüft wird, ob der eingegebene Wert den dem Prozessschritt zugeordneten Eingabevorgaben entspricht.

Die Navigationsdatei kann mit einem Aufzeichnungsmittel oder einem Aufzeichnungsverfahren auf einer ersten Datenverarbeitungseinrichtung erzeugt werden und das zu bedienende Computerprogramm auf einer zweiten Datenverarbeitungseinrichtung ausgeführt werden, wobei die Navigationsdatei vor dem Ermitteln des aktuellen Kontextes des Computerprogramms in einen Arbeitspeicher der zweiten Datenverarbeitungseinrichtung geladen wird.

Das erfindungsgemäße Verfahren kann ferner einen Schritt zum Anzeigen von Informationen zu der von dem Benutzer durchzuführenden Benutzinteraktion auf der Anzeigeeinrichtung umfassen, wobei die Informationen vorzugsweise ein Bild des zu bedienenden Benutzeroberflächenobjektes und einen Beschreibungstext umfassen.

Gemäß einem besonderen Aspekt der Erfindung ist das erfindungsgemäße Verfahren angepasst, nicht vorgesehene und/oder falsche Aktionen und/oder Eingaben des Benutzers während der Bedienung des Computerprogramms zu erkennen und ggf. den Benutzer hierüber zu informieren oder die weitere Bedienung des Computerprogramms so lange zu unterbinden, bis die korrekte Aktion bzw. eine korrekte Eingabe erfolgt. Ferner kann ermittelt werden, ob er sich das Computerprogramm bzw. ein vorbestimmter Workflow noch im vordefinierten Ablauf befindet bzw. ob sich das Computerprogramm erwartungsgemäß verhält.

Ferner wird durch die Erfindung ein System zur Unterstützung eines Benutzers während einer Bedienung zumindest eines vorbestimmten Computerprogramms bereitgestellt, wobei das System Mittel zum Ausführen des Computerprogramms, eine Anzeigeeinrichtung zur Anzeige des sich in Ausführung befindlichen Computerprogramms, Eingabemittel zur Entgegennahme von Benutzereingaben und Navigationsmittel, welche angepasst sind, das erfindungsgemäße Verfahren auszuführen, umfasst, wobei die Navigationsmittel über zumindest eine Objekterkennungsschnittstelle mit dem Computerprogramm koppelbar sind, um das Computerprogramm entsprechend der in der Navigationsdatei gespeicherten Prozessschritte zu überwachen und zu steuern.

Des Weiteren wird ein Computerprogrammprodukt mit Programmcode bereitgestellt, wobei der Programmcode, wenn in eine Datenverarbeitungsanlage geladen, das erfindungsgemäße Verfahren zur Ausführung bringt.

Das erfindungsgemäße Verfahren ermöglicht es, einen Benutzer bei der Bedienung eines Computerprogramms zu unterstützen, wobei der Benutzer automatisiert durch das Computerprogramm geführt wird, ohne dass er Vorkenntnisse über das Computerprogramm oder die für die Bedienung des Computerprogramms erforderlichen Aktionen und Eingaben haben muss.

Die Verwendung des erfindungsgemäßen Verfahrens während der Bedienung des Computerprogramms gewährleistet zudem, dass für einen vorbestimmten Workflow, welcher durch eine Anzahl vorbestimmter Benutzinteraktion definiert wird, dasselbe Ergebnis erzielt wird wie bei der Bedienung des Computerprogramms ohne das erfindungsgemäße Verfahren. Das erfindungsgemäße Verfahren gewährleistet zudem, dass der Benutzer deutlich schneller und sicherer durch ein Computerprogramm geführt wird, als etwa unter Zuhilfenahme eines gedruckten oder elektronischen Benutzerhandbuches.

### Kurzbeschreibung der Figuren

Weitere Einzelheiten und Merkmale der Erfindung sowie konkrete Ausführungsbeispiele der Erfindung ergeben sich aus der nachfolgenden Beschreibung in Verbindung mit der Zeichnung. Es zeigt:
- Fig. 1: ein Ablaufdiagramm eines möglichen Ablaufes eines erfindungsgemäßen Verfahrens;
- Fig. 2: ein Ablaufdiagramm für die Durchführung einer Synchronisation einer Navigationsdatei mit einem ausgeführten Computerprogramm;
- Fig. 3a, 3b: ein Beispiel für Benutzeroberflächenobjekte, bei dem sich sowohl die Position des hervorzuhebenden Benutzeroberflächenobjektes als auch die Reihenfolge der Benutzeroberflächenobjekte in einer Zielumgebung von der Position und Reihenfolge der Benutzeroberflächenobjekte in einer Referenzumgebung unterschiedet;
- Fig. 3c, 3d: ein Beispiel für Benutzeroberflächenobjekte, bei dem sich die Größe der Benutzeroberflächenobjekte in einer Zielumgebung von der Größe der Benutzeroberflächenobjekte in einer Referenzumgebung unterscheidet;
- Fig. 3e, 3f: ein weiteres Beispiel, beim sich mehrere Bezugsmerkmale des hervorzuhebenden Benutzeroberflächenobjektes in der Referenzumgebung von denen in der Zielumgebung unterscheiden;
- Fig. 4: ein Ablaufdiagramm für das Ermitteln eines auszuwählenden Benutzeroberflächenobjektes eines ausgeführten Computerprogramms;
- Fig. 5: ein Ablaufdiagramm für das erfindungsgemäße Bestimmen eines Übereinstimmungswertes;
- Fig. 6: ein Ablaufdiagramm für das erfindungsgemäße Auswählen eines Benutzeroberflächenobjektes aus einer Ergebnisliste von möglichen Benutzeroberflächenobjekten;
- Fig. 7: ein Beispiel einer Bildschirmmaske mit einem hervorgehobenen Bereich, welcher das hervorzuhebende Benutzeroberflächenobjekt enthält;
- Fig. 8: ein Ablaufdiagramm für das erfindungsgemäße Hervorheben eines Benutzeroberflächenobjektes an einer Anzeigeeinrichtung; und
- Fig. 9: ein Ablaufdiagramm für das Validieren einer Benutzeingabe.

### Detaillierte Beschreibung der Erfindung

### Definitionen

Prozessschritt - Die Bedienung eines Computerprogramms bzw. einer Softwareanwendung umfasst eine Anzahl von durch einen Benutzer des Computerprogramms durchzuführende Prozessschritten. Eine vorbestimmte Reihenfolge von Prozessschritten repräsentiert einen Workflow. Ein Prozessschritt wird repräsentiert durch eine vorbestimmte Benutzerinteraktion mit einem vorbestimmten Benutzeroberflächenobjekt in einem vorbestimmten Kontext des Computerprogramms. Zwei Prozessschritte eines Workflows können dabei unterschiedlichen Computerprogrammen zugeordnet sein. So kann etwa vorgesehen sein, dass ein erster Prozessschritt eines Workflows in einem ersten Computerprogramm auszuführen ist, während ein zweiter Prozessschritt des Workflows in einem zweiten Computerprogramm auszuführen ist.

Benutzeroberflächenobjekt - Ein Benutzeroberflächenobjekt ist ein Objekt an der Benutzeroberfläche, etwa in einem Dialog eines Computerprogramms, über welche der Benutzer mit dem Computerprogramm interagieren kann. Beispiele hierfür sind etwa ein Eingabefeld zum Erfassen einer Belegnummer in einer Maske eines Buchhaltungsprogramms, eine Schaltfläche zum Drucken einer Tabelle in einer Tabellenkalkulation, eine Checkbox zum Aktivieren der Rechtsschreiboption in einem Textverarbeitungsprogramm, oder eine Tabelle zum Auswählen eines Kunden in einer Internet-Anwendung.

Benutzerinteraktion bzw. Benutzeraktion - Eine Benutzerinteraktion wird repräsentiert durch eine Interaktion des Benutzers mit einem Benutzeroberflächenobjekt, vorzugsweise über ein Eingabegerät (z.B. Maus oder Tastatur). Beispiele hierfür sind etwa ein Mausklick auf einen Knopf (Button), ein Mausrechtsklick auf ein Eingabefeld, ein Mausdoppelklick in einen vorbestimmten Bereich eines Bildschirmdialoges, ein Ziehen und Fallenlassen (Drag&Drop) eines Objektes, eine Eingabe eines Wertes in ein Eingabefeld oder das Drücken einer Funktionstaste (z.B. F1, Cursor links, Leertaste, etc.) oder einer beliebigen anderen Taste einer Tastatur.

Kontext des Computerprogramms bzw. Anwendungskontext - Als Anwendungskontext wird eine vorbestimmte Benutzeroberfläche (Eingabemaske, Dialog) eines vorbestimmten Computerprogramms in einem vorbestimmten Zustand bezeichnet. Beispiele hierfür sind etwa der Startbildschirm eines vorbestimmten eMail-Programmes, eine Eingabemaske zum Anlegen eines Kundenauftrages innerhalb einer vorbestimmten Transaktion in einem Warenwirtschaftssystem, ein Dialog zum Formatieren von Zellen in einer vorbestimmten Tabellenkalkulation, ein Dialog zum Formatieren eines Absatzes in einer vorbestimmten Textverarbeitung oder eine Seite zum Erfassen eines Kunden in einer vorbestimmten Internet-anwendung.

Ursprungscomputer oder Referenzcomputer - Als Referenz- oder Ursprungscomputer wird der Computer bezeichnet, auf dem die Anwendung bzw. Bedienung eines Computerprogramms aufgezeichnet wird.

Zielcomputer - Als Zielcomputer wird der Computer bezeichnet, auf dem die Bedienung des Computerprogramms unterstützt wird bzw. ein Benutzer durch das Computerprogramm geführt wird. In einer besonderen Ausgestaltung der Erfindung kann der Zielcomputer dem Referenzcomputer entsprechen, d.h. die Bedienung wird auf dem Computer aufgezeichnet, auf dem auch die Bedienung des Computerprogramms durch den Benutzer erfolgt.

Für eine erfindungsgemäße Unterstützung eines Benutzers bei der Bedienung eines Computerprogramms wird zunächst eine Navigationsdatei erzeugt, welche die für die Bedienung des Computerprogramms bzw. eines vorbestimmten Workflows mit Hilfe des Computerprogramms erforderlichen Benutzerinteraktionen mit dem Computerprogramm enthält. Für das Erzeugen der Navigationsdatei kann ein Aufzeichnungsverfahren gewählt werden, bei dem die notwendigen Prozessschritte bzw. Interaktionen mit dem Computerprogramm auf dem Referenzcomputer durch einen Benutzer durchgeführt werden und die Bestandteile jeder durchgeführten Interaktion (Benutzerinteraktion, Anwendungskontext, Benutzeroberflächenobjekt) als Prozessschritte in einer Datei (Navigationsdatei) gespeichert werden. Die Reihenfolge der Prozessschritte in der Navigationsdatei entspricht dabei vorzugsweise der Reihenfolge, in der die Interaktionen durch den Benutzer durchgeführt worden sind. Die Navigationsdatei wird dann permanent gespeichert, sodass auf sie von dem Zielcomputer, auf dem das Computerprogramm zur Ausführung kommt und auf dem ein Benutzer während der Bedienung des Computerprogramms unterstützt werden soll, aus zugegriffen werden kann.

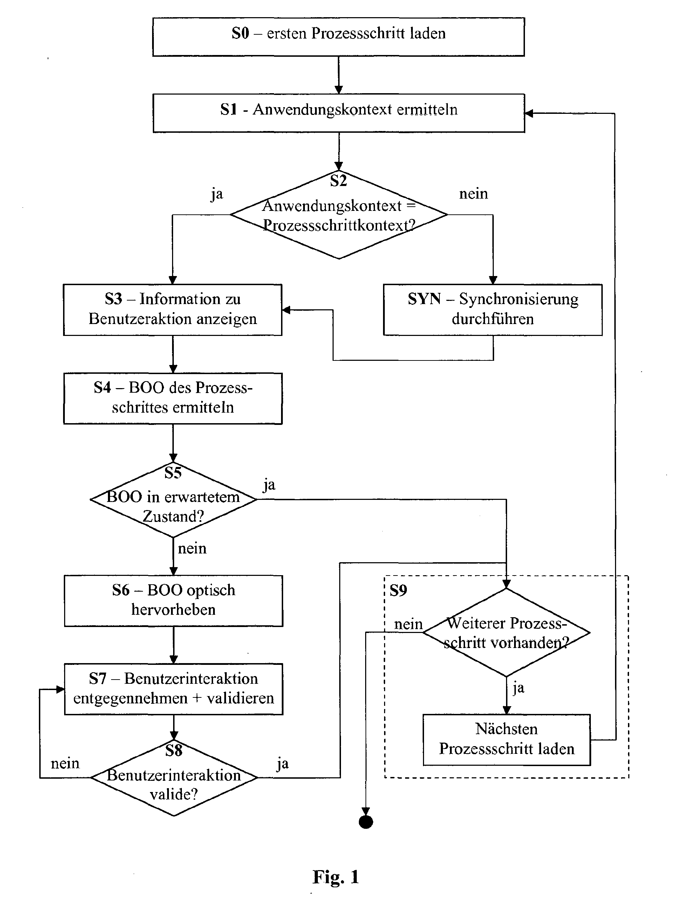

**Fig. 1** zeigt ein Ablaufdiagramm eines möglichen Ablaufes eines erfindungsgemäßen Verfahrens. Der in Fig. 1 gezeigte Ablauf wird nachfolgend als Hauptprogramm oder Hauptverfahren bezeichnet.

Ist eine Unterstützung eines Benutzers während der Bedienung eines Computerprogramms erwünscht, kann der Benutzer diese etwa durch Drücken der F1-Taste oder durch Anklicken eines Hilfe-Knopfes angefordert werden. Die Unterstützung kann vorzugsweise an jeder Stelle im Workflow angefordert werden, wie nachfolgend näher beschrieben wird.

Nach dem Anfordern der Unterstützung werden zunächst in einem Initialisierungsschritt S0 die dem ausgeführten bzw. auszuführenden Workflow zugeordnete Navigationsdatei und der erste in der Navigationsdatei gespeicherte Prozessschritt in den Arbeitspeicher des Zielcomputers geladen. Der erste Prozessschritt repräsentiert die erste durch einen Benutzer durchzuführende Interaktion mit dem Computerprogramm in einem bestimmten Workflow.

In dem nächsten Schritt S1 wird der aktuelle Kontext (Anwendungskontext) des ausgeführten Computerprogramms ermittelt.

Im Schritt S2 wird geprüft, ob der Anwendungskontext des ausgeführten Computerprogramms dem Anwendungskontext des in dem Initialisierungsschritt S0 geladenen Prozessschrittes entspricht. Diese Prüfung ist vorteilhaft, weil die Unterstützung der Bedienung des Computerprogramms an jeder Stelle des Workflows angefordert werden kann. Beispielsweise kann die Unterstützung erstmalig angefordert werden, nachdem der Benutzer bereits eine Anzahl von Workflow-Schritten durchgeführt hat. In diesem Fall kann der aktuelle Anwendungskontext des Computerprogramms verschieden von dem Anwendungskontext des geladenen Prozessschrittes sein.

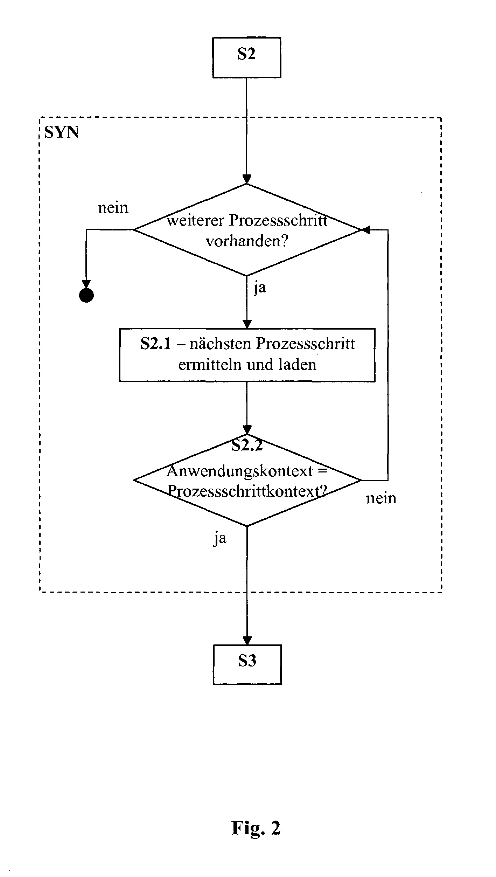

Sofern der aktuelle Anwendungskontext des ausgeführten Computerprogramms dem Anwendungskontext des geladenen Prozessschrittes entspricht, wird das erfindungsgemäße Verfahren mit dem Schritt S3 fortgesetzt. Anderenfalls wird in dem Schritt SYN eine Synchronisierung der Navigationsdatei mit dem Computerprogramm durchgeführt, was mit Bezug auf Fig. 2 näher beschrieben wird. Durch die Synchronisierung wird jener Prozessschritt aus der Navigationsdatei geladen, welcher dem aktuellen Anwendungskontext des Computerprogramms entspricht. Nach der Synchronisierung wird das Verfahren ebenfalls mit Schritt S3 fortgesetzt.

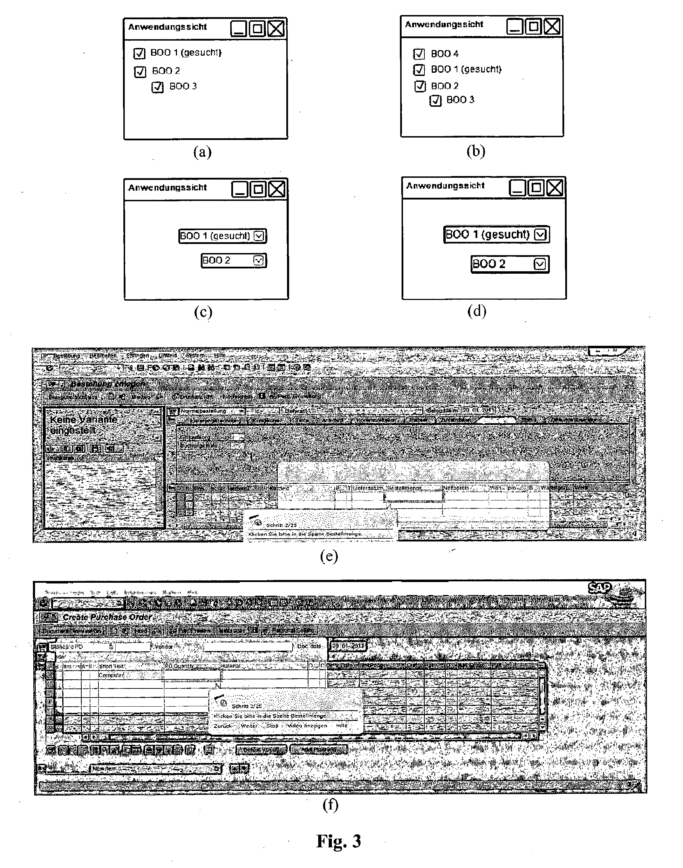

In dem Schritt S3 wird die von dem Benutzer durchzuführende Benutzeraktion (Interaktion mit dem Computerprogramm) sowie das aufgezeichnete Bild des Benutzeroberflächenobjektes auf der Anzeigeeinrichtung zur Anzeige gebracht. Damit werden dem Benutzer Informationen über die Benutzeraktion angezeigt, etwa ein Hilfetext, welche Information in ein Eingabefeld einzutragen ist. Der Hilfetext kann etwa in Form eine Sprechblase, welche auf das Benutzeroberflächenobjekt zeigt, angezeigt werden, wie etwa in Fig. 3f ersichtlich. Das Bild des Benutzeroberflächenobjektes sowie die weitere Information über die durchzuführende Benutzeraktion können in der Navigationsdatei zu dem Benutzeroberflächenobjekt gespeichert werden. Während der Erzeugung der Navigationsdatei kann auch ein Bild des Benutzeroberflächenobjektes erzeugt werden. Die Information über die durchzuführende Benutzeraktion kann während der Erzeugung der Navigationsdatei von einem Benutzer eingegeben werden.

Der Schritt S3 kann auch nach dem Schritt S4 oder nach dem Schritt S5 durchgeführt werden.

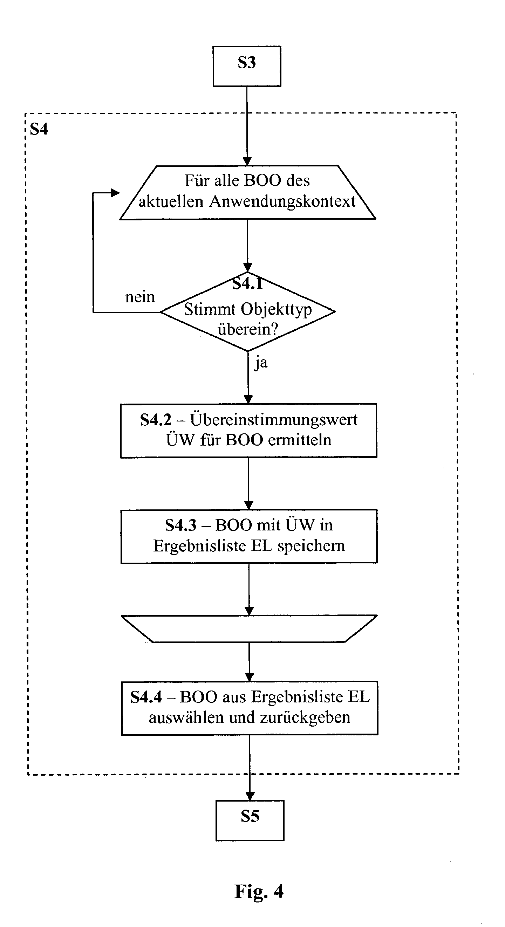

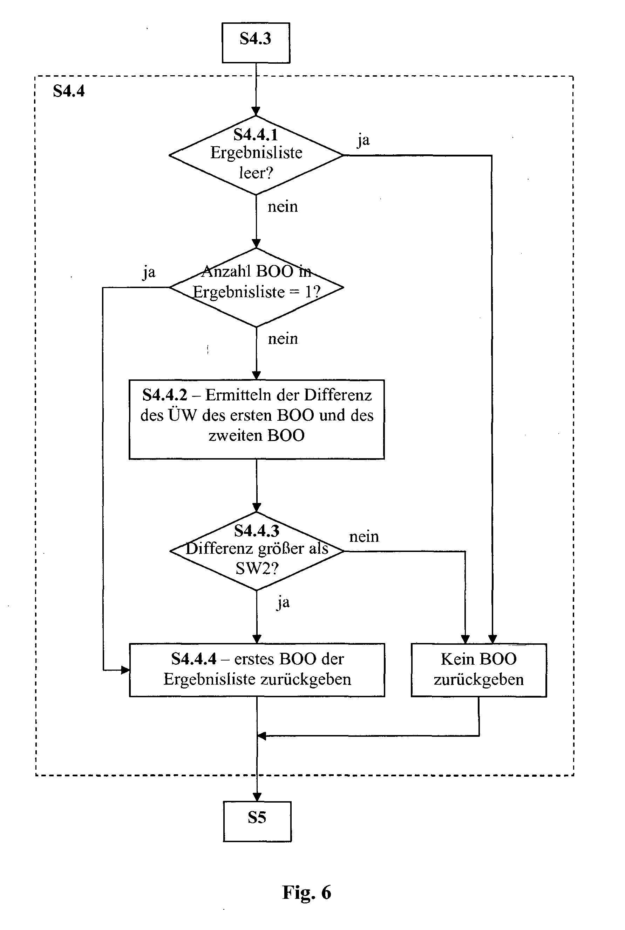

In dem nachfolgenden Schritt S4, welcher mit Bezug auf Fig. 4 näher beschrieben wird, wird jenes Benutzeroberflächenobjekt BOO des Computerprogramms ermittelt, welches dem Benutzeroberflächenobjekt des aktuell geladenen Prozessschrittes entspricht. Dies ist notwendig, weil das Computerprogramm in dem aktuellen Anwendungskontext (z.B. in einer Eingabemaske) mehrere, auch gleichartige Benutzeroberflächenobjekte zur Anzeige bringen kann. Kann kein entsprechendes Benutzeroberflächenobjekt ermittelt werden (vgl. Fig. 4, Schritt S4.4 und Fig. 6) wird eine entsprechende Meldung an den Benutzer ausgegeben (in Fig. 1 nicht gezeigt) und das Verfahren ggf. abgebrochen bzw. beendet.

Nachdem das entsprechende Benutzeroberflächenobjekt ermittelt worden ist, wird in dem nächsten Schritt S5 geprüft, ob sich das ermittelte Benutzeroberflächenobjekt bereits in dem erwarteten Zustand befindet, welcher durch die dem aktuellen Prozessschritt zugeordnete Benutzerinteraktion herbeigeführt werden soll. Beispielsweise kann der aktuelle Prozessschritt einen Klick (=Benutzerinteraktion) auf eine Checkbox (=Benutzeroberflächenobjekt) definieren, wodurch die Checkbox aktiviert werden soll. Der erwartete Zustand wäre in diesem Fall eine aktivierte Checkbox. Ist die Checkbox bereits aktiviert, kann der aktuelle Prozessschritt abgebrochen bzw. beendet werden und mit dem Schritt S9 des Verfahrens fortgefahren werden.

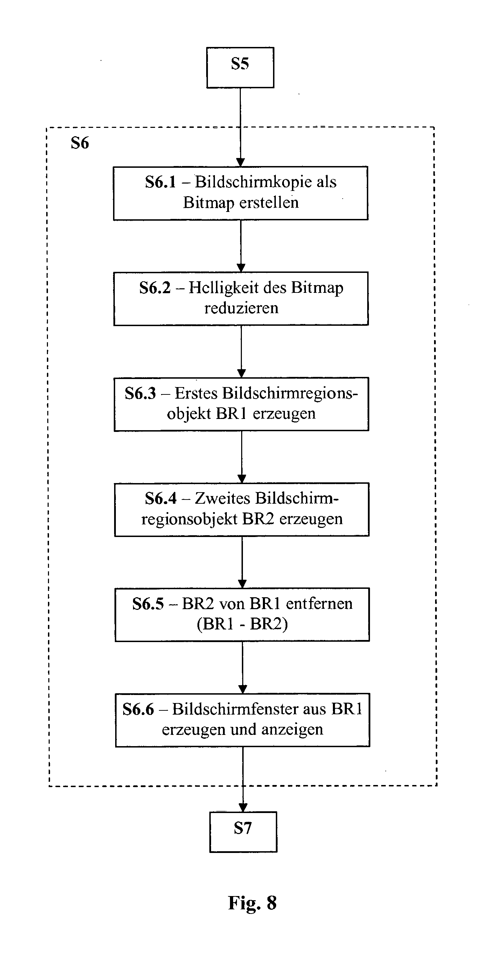

Befindet sich das ermittelte Benutzeroberflächenobjekt nicht in dem erwarteten Zustand, wird in dem nächsten Schritt S6, welcher mit Bezug auf Fig. 8 näher beschrieben wird, das ermittelte Benutzeroberflächenobjekt für den Benutzer hervorgehoben. Vorzugsweise wird das Benutzeroberflächenobjekt optisch hervorgehoben. Alternativ kann auch ein akustischer Hinweis auf das ermittelte Benutzeroberflächenobjekt ausgegeben werden.

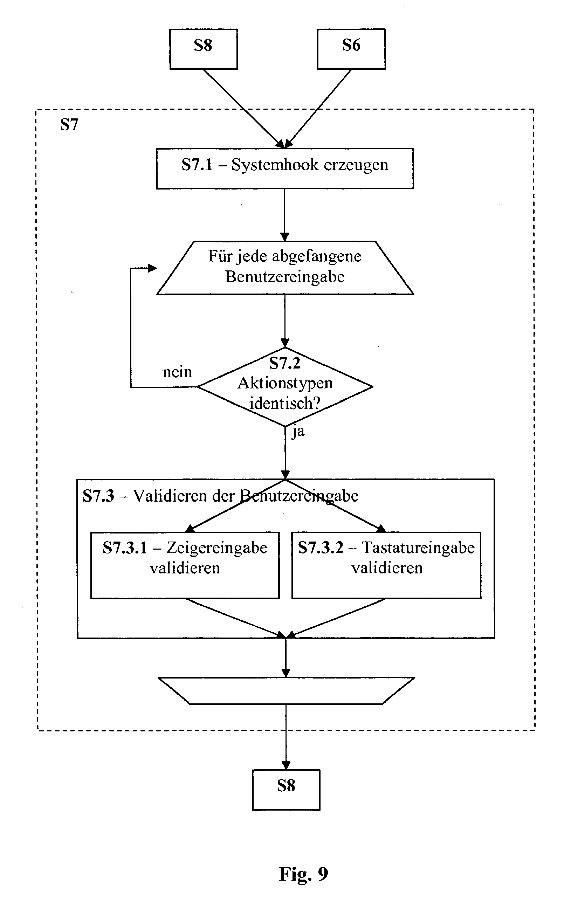

Nach dem Hervorheben des Benutzeroberflächenobjektes werden in den Schritten S7 und S8 Benutzerinteraktionen entgegengenommen und validiert. Der Schritt S7 wird mit Bezug auf Fig. 9 näher beschrieben. Wenn die entgegengenommene Benutzinteraktion valide ist, was im Schritt S8 geprüft wird, verzweigt der Programmablauf des erfindungsgemäßen Verfahrens zu Schritt S9. Anderenfalls kehrt das Verfahren zum Schritt S7 zurück und wartet auf die nächste Benutzerinteraktion.

In dem Schritt S9 wird zunächst geprüft, ob in der Navigationsdatei noch weitere Prozessschritte enthalten sind. Enthält die Navigationsdatei noch weitere Prozessschritte, wird der nächste Prozessschritt geladen und zu dem Schritt S1 gesprungen, wobei das zuvor beschriebene Verfahren für den neu geladenen Prozessschritt durchgeführt wird. Enthält die Navigationsdatei keinen weiteren Prozessschritt, wird das erfindungsgemäße Verfahren beendet und ggf. ein Hinweis für den Benutzer ausgegeben.

**Fig. 2** zeigt ein Ablaufdiagramm für die Durchführung einer Synchronisation einer Navigationsdatei mit einem ausgeführten Computerprogramm in dem Schritt SYN.

Durch die Synchronisation der Navigationsdatei mit dem Computerprogramm wird in vorteilhafter Weise erreicht, dass automatisch der korrekte Prozessschritt aus der Navigationsdatei geladen wird, welcher dem aktuellen Workflow-Schritt des Computerprogramms entspricht, sofern der Benutzer des Computerprogramms bereits Workflow-Schritte durchgeführt hat, bevor er die Unterstützung anfordert. Damit wird es ermöglicht, dass die Unterstützung eines Benutzers während der Bedienung eines Computerprogramms auch dann verwendet werden kann, wenn sich das aktive Computerprogramm bzw. der aktuelle Workflow nicht in dem Zustand befindet, der im ersten Prozessschritt der Navigationsdatei vorgesehen ist.

Beispielsweise kann die Navigationsdatei die folgenden Prozessschritte enthalten:
1. Prozessschritt 1 im Anwendungskontext 1;
2. Prozessschritt 2 im Anwendungskontext 1;
3. Prozessschritt 3 im Anwendungskontext 2;
4. weitere Prozessschritte.

Das Computerprogramm bzw. der aktuelle Workflow befindet sich beispielsweise im Anwendungskontext 2, wenn der Benutzer die Unterstützung anfordert. Die Unterstützung sieht allerdings vor, mit dem Prozessschritt 1 im Anwendungskontext 1 zu starten. Durch die Synchronisation wird sichergestellt, dass die Unterstützung zum Prozessschritt 3 im Anwendungskontext 2 springt und dieser Prozessschritt für die weitere Ausführung des erfindungsgemäßen Verfahrens von der Navigationsdatei in den Hauptspeicher geladen wird. Ferner wird dadurch vermieden, dass die Unterstützung bereits zu Beginn des auszuführenden Computerprogramms bzw. des auszuführenden Workflows durch den Benutzer angefordert werden muss.

In dem Schritt SYN wird zunächst geprüft, ob in der Navigationsdatei ein weiterer Prozessschritt enthalten ist. Falls kein weiterer Prozessschritt vorhanden ist, wird der Ablauf des erfindungsgemäßen Verfahrens beendet und dem Benutzer ggf. das Ende der Unterstützung mitgeteilt. Anderenfalls wird in dem Schritt S2.1 der nächste Prozessschritt ermittelt und in den Arbeitsspeicher des Zielcomputers geladen. Für den geladenen Prozessschritt wird anschließen geprüft (Schritt S2.2), ob der Kontext des Prozessschrittes dem aktuellen Anwendungskontext des Computerprogramms bzw. des Workflows entspricht. Entspricht der Kontext des Prozessschrittes nicht dem aktuellen Anwendungskontext des Computerprogramms, werden die Synchronisationsschritte für den nächsten Prozessschritt aus der Navigationsdatei wiederholt. Entspricht hingegen der Kontext des geladenen Prozessschrittes dem aktuellen Anwendungskontext des Computerprogramms, wird in dem Verfahrensablauf mit Schritt S3 fortgefahren (vgl. Fig. 1).

**Fig. 3a** und **Fig. 3b** zeigen ein Beispiel für Benutzeroberflächenobjekte auf einem Ursprungscomputer (Fig. 3a) und auf einem Zielcomputer (Fig. 3b), wobei sich sowohl die Position des hervorzuhebenden Benutzeroberflächenobjektes BOO 1 als auch die Reihenfolge der Benutzeroberflächenobjekte BOO 1 bis BOO 4 auf dem Zielcomputer von der Position und Reihenfolge der Benutzeroberflächenobjekte auf dem Referenzcomputer unterscheiden. Ferner befindet sich auf dem Zielcomputer ein weiteres Benutzeroberflächenobjekt BOO 4, welches auf dem Referenzcomputer nicht vorhanden ist.

Mit dem erfindungsgemäßen Verfahren ist es erstmals möglich, das hervorzuhebende Benutzeroberflächenobjekt BOO 1 auf dem Zielcomputer im gleichen Anwendungskontext (z.B. Eingabemaske) zu identifizieren, selbst wenn sich die Bezugsmerkmale (z.B. die absolute Position von BOO 1 in der Eingabemaske, die Reihenfolge der Benutzeroberflächenobjekte) des zu identifizierenden Benutzeroberflächenobjekts BOO 1 auf dem Zielcomputer erheblich von den Bezugsmerkmalen des Benutzeroberflächenobjekts BOO 1 auf dem Referenzcomputer unterscheiden. Diese Abweichungen der Bezugsmerkmale können etwa durch unterschiedliche Benutzereinstellungen, wie Bildschirmauflösung, Betriebssystemdesign, Schriftartengröße oder durch Anpassungen des Computerprogramms (Customizing) selbst verursacht werden. Wie in Fig. 3a und Fig. 3b erkennbar ist, werden gleichzeitig mehrere gleichartige Benutzeroberflächenobjekte (hier drei bzw. vier Checkboxen) angezeigt, wobei erfindungsgemäß auch in diesem Fall das hervorzuhebende Benutzeroberflächenobjekt BOO 1 auf dem Zielcomputer erfolgreich identifiziert werden kann, wie mit Bezug auf Fig. 4 bis Fig. 6 näher beschrieben wird.

**Fig. 3c** und **Fig. 3d** zeigen ein weiteres Beispiel für Benutzeroberflächenobjekte auf einem Ursprungscomputer (Fig. 3c) und auf einem Zielcomputer (Fig. 3d), wobei sich hier die Benutzeroberflächenobjekte in ihrer Größe unterscheiden. Die abweichende Breite und Höhe der Benutzeroberflächenobjekte hat zu Folge, dass sich auch die absoluten Positionen der Benutzeroberflächenobjekte in dem Anwendungskontext (z.B. Eingabemaske) voneinander abweichen. Dennoch kann das gesuchte Benutzeroberflächenobjekt BOO 1 erfolgreich identifiziert werden.

**Fig. 3e** und **Fig. 3f** zeigen ein noch weiteres Beispiel von Benutzeroberflächenobjekten auf einem Ursprungscomputer (Fig. 3e) und auf einem Zielcomputer (Fig. 3f). Das zu identifizierende bzw. hervorzuhebende Benutzeroberflächenobjekt ist in diesem Fall die erste Zelle in der Spalte "Bestellmenge" (auf dem Referenzcomputer in Fig. 3e). Das entsprechende Benutzeroberflächenobjekt auf dem Zielcomputer (Fig. 3f) unterscheidet sich von dem Benutzeroberflächenobjekt auf dem Referenzcomputer in mehreren Faktoren:
- Feldbezeichnung (Bestellmenge ./. PO Quantity)
- Oberflächendesign
- Spaltenreihenfolge (Spalte 10 ./. Spalte 6) und damit auch die relative Position des Benutzeroberflächenobjekts zur Tabelle
- absolute Position der hervorzuhebenden Zelle, etc.

Auch in diesem Fall kann das zu suchende Benutzeroberflächenobjekt auf dem Zielcomputer trotz erheblicher Abweichungen von dem Benutzeroberflächenobjekt auf dem Referenzcomputer erfolgreich identifiziert werden, wie nachfolgend näher beschrieben wird.

**Fig. 4** zeigt ein Ablaufdiagramm für das Ermitteln eines auszuwählenden bzw. hervorzuhebenden Benutzeroberflächenobjektes eines sich in Ausführung befindlichen Computerprogramms auf einem Zielcomputer.

Das auf dem Zielcomputer ausgeführte Computerprogramm verfügt über zumindest eine Programmierschnittstelle (API), über die zu jeder Zeit hierarchisch alle sichtbaren Objekte (die an der Anzeigeeinrichtung angezeigten Benutzeroberflächenobjekte BOO des Computerprogramms) sowie deren Eigenschaften, wie z.B. absolute / relative Position, Größe, Text, Objekttyp (Eingabefeld, Schaltfläche, etc.), Information über benachbarte und übergeordnete Objekte, etc. ausgelesen werden können. Diese Programmierschnittstelle wird im folgenden Objekterkennungsschnittstelle genannt.

Für das Erzeugen der Navigationsdatei kann ein Aufzeichnungsverfahren gewählt werden, bei dem die notwendigen Prozessschritte bzw. Interaktionen mit dem Computerprogramm auf dem Referenzcomputer durch einen Benutzer durchgeführt werden und die Bestandteile jeder durchgeführten Interaktion (Benutzerinteraktion, Anwendungskontext, Benutzeroberflächenobjekt) als Prozessschritte in der Navigationsdatei gespeichert werden.

Ein Prozessschritt wird im Wesentlichen durch das Tripel (Anwendungskontext, Benutzeroberflächenobjekt, Benutzerinteraktion) repräsentiert.

Beim Erzeugen der Navigationsdatei auf dem Referenz- bzw. Ursprungscomputer mit Hilfe des Aufzeichnungsverfahrens werden ferner für ein Benutzeroberflächenobjekt BOO eines Prozessschrittes über diese Objekterkennungsschnittstelle die Objekteigenschaften ermittelt und in der Navigationsdatei gespeichert.

Ein Benutzeroberflächenobjekt wird im Wesentlichen durch ein Tupel (OE1, OE2, ..., OEn) repräsentiert, wobei OEi eine Objekteigenschaft des Benutzeroberflächenobjekts ist. Ein Beispiel für ein Tupel ist (Position, Größe, Text, Farbe, Objekttyp).

Sofern das Computerprogramm über mehrere Objekterkennungsschnittstellen verfügt, kann es vorteilhaft sein, mehrere oder alle der zur Verfügung stehenden Objekterkennungsschnittstellen abzufragen.

Beim Ermitteln des dem geladenen Prozessschritt entsprechenden Benutzeroberflächenobjektes des Computerprogramms auf dem Zielcomputer werden zunächst alle über die Objekterkennungsschnittstelle bzw. Objekterkennungsschnittstellen verfügbaren Benutzeroberflächenobjekte mit dem Benutzeroberflächenobjekt des Prozessschritts verglichen und die Vergleichsergebnisse in einer Ergebnisliste abgelegt. Aus der Ergebnisliste wird dann jenes Benutzeroberflächenobjekt als hervorzuhebendes Benutzeroberflächenobjekt ausgewählt, welches dem Benutzeroberflächenobjekt des Prozessschrittes am meisten entspricht.

Im Wesentlichen umfasst das Ermitteln eines auszuwählenden bzw. hervorzuhebenden Benutzeroberflächenobjektes die in Fig. 4 gezeigten S4.1 bis S4.3 sowie den Schritt S4.4, wobei die Schritte S4.1 bis S4.3 für jedes auf dem Zielcomputer sichtbare Benutzeroberflächenobjekt durchgeführt werden.

In dem Schritt S4.1 wird zunächst geprüft, ob der Objekttyp des Benutzeroberflächenobjekts des Prozessschrittes mit dem Objekttyp des aktuell über die Objekterkennungsschnittstelle abgefragten Benutzeroberflächenobjektes entspricht. Sofern die Objekttypen nicht übereinstimmen, wird das nächste über die Objekterkennungsschnittstelle verfügbare Benutzeroberflächenobjekt abgefragt und der Schritt S4.1 wiederholt.

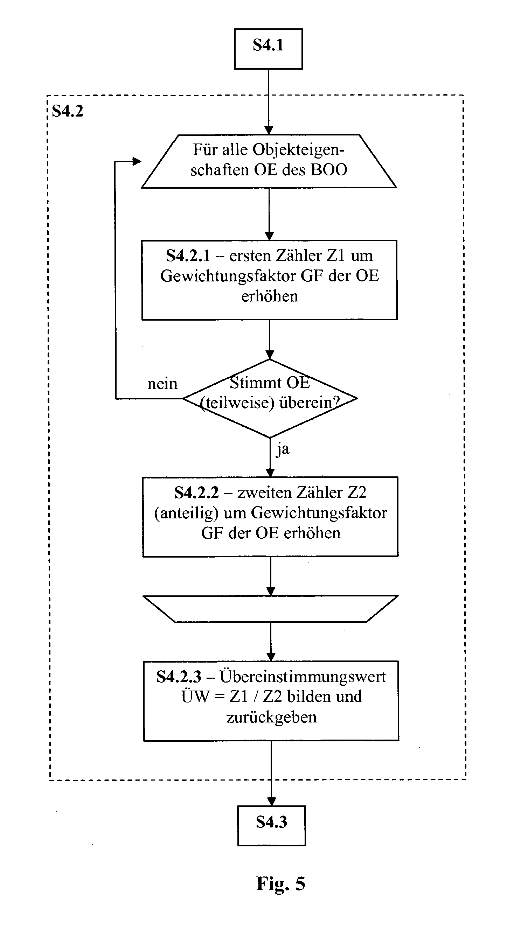

Wenn die Objekttypen übereinstimmen, wird in dem Schritt S4.2 ein Übereinstimmungswert ÜW ermittelt. Der Ablauf für das ermitteln des Übereinstimmungswert ÜW wird mit Bezug auf Fig. 5 näher beschrieben.

In dem nächsten Schritt S4.3 wird das Benutzeroberflächenobjekt zusammen mit dem ÜW in einer Ergebnisliste EL gespeichert. Vorzugsweise werden die Benutzeroberflächenobjekte sortiert, bevorzugt nach dem Übereinstimmungswert ÜW absteigend sortiert, in der Ergebnisliste EL gespeichert.

Es hat sich als vorteilhaft erwiesen, nur jene Benutzeroberflächenobjekte in der Ergebnisliste zu speichern, deren Übereinstimmungswert ÜW einen vorbestimmten Schwellenwert SW1 überschreitet. Zahlreiche Massen- und Praxistests haben ergeben, dass ein Schwellenwert SW1 von 0,7 bzw. 70% den bestmöglichen Kompromiss aus Sicherheit, nicht das falsche Benutzeroberflächenobjekt zu identifizieren, und ausreichender Abweichungstoleranz der Idealwert ist.

Befindet sich etwa das gesuchte Benutzeroberflächenobjekt aufgrund einer Ausnahmesituation nicht in der aktuellen Anwendungssicht bzw. Anwendungskontext, führt ein deutlich verringerter Schwellenwert SW1 dazu, dass ein falsches Benutzeroberflächenobjekt identifiziert werden könnte. Umgekehrt würde ein deutlich erhöhter Schwellenwert SW1 dazu führen, dass das gesuchte Benutzeroberflächenobjekt dann nicht identifiziert werden kann, wenn seine Eigenschaften, wie z.B. Position oder Dimension auf dem Zielcomputer von denen auf dem Ursprungscomputer aufgezeichneten zu sehr abweichen. Selbstverständlich kann der Schwellenwert SW1 auch verschieden von 0,7 bzw. 70% gewählt werden, was letztlich von den konkreten Anforderungen abhängt.

Nachdem alle über die Objekterkennungsschnittstelle verfügbaren Benutzeroberflächenobjekte abgefragt worden sind, wird in dem Schritt S4.4 jenes Benutzeroberflächenobjekt aus der Ergebnisliste EL ausgewählt, welches dem zu suchenden Benutzeroberflächenobjekt (das Benutzeroberflächenobjekt aus dem Prozessschritt) am besten entspricht. Bei einer nach dem Übereinstimmungswert ÜW absteigend sortierten Ergebnisliste ist dies das erste Benutzeroberflächenobjekt der Ergebnisliste. Der genaue Ablauf für das Auswählen eines Benutzeroberflächenobjektes aus der Ergebnisliste wird mit Bezug auf Fig. 6 näher erläutert.

**Fig. 5** zeigt ein Ablaufdiagramm für das erfindungsgemäße Bestimmen eines Übereinstimmungswertes ÜW (Schritt S4.2).

Der Übereinstimmungswert ÜW für ein Benutzeroberflächenobjekt wird im Wesentlichen auf Basis der Objekteigenschaften OE des Benutzeroberflächenobjektes bestimmt, wobei die Objekteigenschaften OE des über die Objekterkennungsschnittstelle abgefragten Benutzeroberflächenobjektes BOO mit den entsprechenden Objekteigenschaften OE des Benutzeroberflächenobjektes BOO das aktuellen Prozessschrittes verglichen und bewertet werden.

Hierzu wird jeder verfügbaren Objekteigenschaft OE ein Gewichtungsfaktor GF zugeordnet. Objekteigenschaften OE mit weniger zu erwartenden Abweichungen, etwa Text oder Objekthierarchie, werden deutlich höhere Gewichtungsfaktoren zugeordnet als Objekteigenschaften, bei denen eine höhere Abweichung zu erwarten ist. Objekteigenschaften mit höher zu erwartenden Abweichungen sind etwa die Objektposition oder Objektgröße eine Benutzeroberflächenobjektes, da diese stark auflösungs- und designabhängig sind.

Alle verfügbaren Objekteigenschaften OE der zu vergleichenden Benutzeroberflächenobjekte BOO werden iterativ verglichen (Schritte S4.2.1 und S4.2.2), wobei während des Vergleiches zwei Zähler Z1 und Z2 erhöht werden, wie nachfolgend beschrieben wird.

Vor Beginn des Vergleiches der Objekteigenschaften OE werden die Zähler Z1 und Z2 mit Null initialisiert. Der erste Zähler Z1 repräsentiert eine maximal erreichbare Punktzahl. Der zweite Zähler Z2 repräsentiert eine tatsächlich erreichte Punktzahl.

Der erste Zähler Z1 wird in dem Schritt S4.2.1 für jede verfügbare Objekteigenschaft um den der Objekteigenschaft zugeordneten Gewichtungsfaktor inkrementiert.

Der zweite Zähler Z2 wird in dem Schritt S4.2.2 nur dann um den der Objekteigenschaft zugeordneten Gewichtungsfaktor inkrementiert, wenn die verglichenen Objekteigenschaften übereinstimmen. Um die Abweichungstoleranz zu erhöhen, werden auch Teilübereinstimmungen bzw. Ähnlichkeiten bei dem Vergleich der Objekteigenschaften berücksichtigt und mit dem entsprechenden Gewichtungsfaktor multipliziert. Wenn etwa die Positionen der verglichenen Benutzeroberflächenobjekte nahe beieinander liegen, kann der zweite Zähler Z2 abhängig vom Abstand um einen Teil des der Objekteigenschaft zugeordneten Gewichtungsfaktors inkrementiert werden.

Stimmen sämtliche Objekteigenschaften der verglichenen Benutzeroberflächenobjekte überein, sind die Werte der Zähler Z1 und Z2 identisch, während bereits bei einer Abweichung nur einer Objekteigenschaft der Zähler Z1 größer ist als der Zähler Z2.

Nachdem in den Schritten S4.2.1 und S4.2.2 die Zähler Z1 und Z2 ermittelt worden sind, wird in dem Schritt S4.2.3 aus den Zählern Z1 und Z2 der Übereinstimmungswert ÜW für das aktuell über die Objekterkennungsschnittstelle abgefragte Benutzeroberflächenobjekt ermittelt und an Schritt S4.3 übergeben, welcher das Benutzeroberflächenobjekt zusammen mit dem Übereinstimmungswert ÜW in der Ergebnisliste speichert. Der Übereinstimmungswert ÜW wird aus dem Quotienten aus erreichter Punktezahl (Zähler Z2) und aus erreichbarer Punktzahl (Zähler Z1) gebildet, Z2/Z1. Der Quotient repräsentiert damit die Übereinstimmungswahrscheinlichkeit für das abgefragte Benutzeroberflächenobjekt.

Fig. 6 zeigt ein Ablaufdiagramm für das erfindungsgemäße Auswählen eines Benutzeroberflächenobjektes aus der Ergebnisliste von möglichen Benutzeroberflächenobjekten (Schritt S4.4).

Hierbei wird in dem Schritt S4.4.1 zunächst geprüft, ob die Ergebnisliste leer ist. Dies kann etwa dann der Fall sein, wenn sich das gesuchte Benutzeroberflächenobjekt mit hoher Annahmewahrscheinlichkeit nicht in der aktuellen Anwendungssicht bzw. im aktuellen Programmkontext befindet. Wie vorstehend mit Bezug auf Fig. 4 ausgeführt, kann für das Abspeichern der Benutzeroberflächenobjekte in der Ergebnisliste EL ein Schwellenwert SW1 vorgesehen sein, wobei die Benutzeroberflächenobjekte nur dann in der Ergebnisliste EL gespeichert werden, wenn der Übereinstimmungswert ÜW des Benutzeroberflächenobjektes diesen Schwellenwert SW1 überschreitet. Liegen die Übereinstimmungswerte ÜW sämtlicher Benutzeroberflächenobjekte unterhalb des Schwellenwertes SW1, dann ist die Ergebnisliste leer. Ist die Ergebnisliste EL leer, wird das Verfahren mit Schritt S5 fortgesetzt, wobei kein (oder ein leeres) Benutzeroberflächenobjekt zurückgegeben wird.

Ist die Ergebnisliste nicht leer, wird in der Regel das oberste bzw. erste Benutzeroberflächenobjekt in der Ergebnisliste EL mit einer sehr hohen Annahmewahrscheinlichkeit das gesuchte Benutzeroberflächenobjekt sein. In einer einfachen Variante des Verfahrens kann das oberste bzw. erste Benutzeroberflächenobjekt aus der Ergebnisliste ausgewählt werden und dem Schritt S5 übergeben werden.

Um die Sicherheit, nicht das falsche Benutzeroberflächenobjekt zu identifizieren, zu erhöhen, sind weitere Schritte S4.4.2 und S4.4.3 vorgesehen, in denen zusätzliche Auswahlkriterien für die Auswahl eines Benutzeroberflächenobjektes aus der Ergebnisliste geprüft werden.

Zunächst wird geprüft, ob die Ergebnisliste EL genau ein Benutzeroberflächenobjekt enthält. Ist dies der Fall kann dieses Benutzeroberflächenobjekt ausgewählt werden und mit dem Schritt S5 fortgefahren werden.

Enthält die Ergebnisliste mehr als ein Benutzeroberflächenobjekt, wird in dem Schritt S4.4.2 eine Differenz aus dem Übereinstimmungswert ÜW des ersten Benutzeroberflächenobjektes in der Ergebnisliste und dem zweiten Benutzeroberflächenobjekt in der Ergebnisliste bestimmt (ÜW_{BOO1} - ÜW_{BOO2}).

Ist die Differenz der Übereinstimmungswerte ÜW der beiden Benutzeroberflächenobjekte kleiner als ein vorbestimmter Schwellenwert SW2 (Schritt S4.4.3), fährt das Verfahren mit Schritt S5 fort, wobei kein Benutzeroberflächenobjekt übergeben wird. Anstelle der Übergabe eines Benutzeroberflächenobjektes kann dem Schritt S5 eine Fehlermeldung "Benutzeroberflächenobjekt nicht eindeutig wiedererkannt" übergeben werden.

Ist hingegen die Differenz der Übereinstimmungswerte ÜW der beiden Benutzeroberflächenobjekte größer als der Schwellenwert SW2 (Schritt S4.4.3), wird das erste Benutzeroberflächenobjekt aus der Ergebnisliste ausgewählt und dem Schritt S5 übergeben.

Mit den Schritten S4.4.2 und S4.4.3 können Verwechslungen bei sehr ähnlichen Benutzeroberflächenobjekten mit hoher Annahmewahrscheinlichkeit vermieden werden.

Massen- und Praxistests haben ergeben, dass der Schwellenwert SW2 einen Wert von etwa 0,05 bzw. 5% haben sollte. Je nach der konkreten Anforderung kann dieser Wert auch nach oben oder nach unten abweichen.

Wird die Schwellenwert SW2 deutlich erhöht, kann dies dazu führen, dass das gesuchte Benutzeroberflächenobjekt dann nicht mehr auf dem Zielcomputer identifiziert werden kann, wenn ein oder mehrere dem gesuchten Benutzeroberflächenobjekt sehr ähnliche Benutzeroberflächenobjekt in der aktuellen Anwendungssicht bzw. in dem aktuellen Programmkontext vorhanden sind. Wird umgekehrt der Schwellenwert SW2 deutlich verringert, so kann dies dazu führen, dass ein falsches Benutzeroberflächenobjekt identifiziert wird, sofern ein oder mehrere dem gesuchten Benutzeroberflächenobjekt sehr ähnliche Benutzeroberflächenobjekt vorhanden sind.

Im Folgenden wird ein Beispiel für das Ermitteln der Übereinstimmungswerte ÜW anhand der in Fig. 3a (Referenzcomputer) und Fig. 3b (Zielcomputer) dargestellten Anwendungssichten gegeben.

### BOO 1 (das zu identifizierende bzw. gesuchte Benutzeroberflächenobjekt):

| | Gewichtungsfaktor | | Erläuterung |
|---|---|---|---|
| Objekteigenschaft | Möglich (Z1) | Erreicht (Z2) | |
| Position | 2,0 | 1,75 | Die vertikalen Bildschirmpositionen sind auf Ursprungscomputer (UC) und Zielcomputer (ZC) gleich. Dadurch sind bereits 50% von 2,0, also 1,0 möglichen Punkten erreicht. Die horizontale Bildschirmposition weicht auf UC und ZC durch das auf dem ZC hinzugekommene BOO 4 um ca. 25% der Bildschirmhöhe ab, dies wird noch mit 75% Übereinstimmung gewertet, also 0,75 Punkten gewertet, also insgesamt 1,75 Punkten. |
| Größe | 4,0 | 4,0 | Die Größe der Benutzeroberflächenobjekte BOO sind auf UC und ZC identisch. |
| Text | 10,0 | 10,0 | Der Text der BOO ist auf UC und ZC identisch (in diesem Fall exemplarisch *BOO 1*). |
| Reihenfolge | 4,0 | 3,0 | Auf dem UC hat BOO 1 den Index 1 innerhalb der Anwendungssicht. Auf dem ZC den Index 2. Als erreichte Punktzahl wird die Maximalpunktzahl abzüglich der Differenz des Indizes, also 4-(2-1)=3 verwendet. |
| Hierarchie | 8,0 | 8,0 | Alle Objekte befinden sich erkennbar auf der Hauptebene der Anwendungssicht, sind also hierarchisch sowohl auf dem UC als auch auf dem ZC gleich. |
| Vorgängerobjekt | 3,0 | 0,0 | Auf dem UC hat das gesuchte BOO kein Vorgängerobjekt. Auf dem ZC hat das gesuchte BOO *BOO 4* als Vorgängerobjekt, daher keine Übereinstimmung= 0 Punkte. |
| Nächstes Objekt | 3,0 | 3,0 | Auf UC und ZC hat das gesuchte BOO *BOO* 2 als Folgeobjekt. Volle Übereinstimmung = 3,0 Punkte. |
| Summe: | 34,0 | 29,75 | |
| ÜW: | 88% | | (=29,75/34,0) |

### BOO 4:

| | Gewichtungsfaktor | | Erläuterung |
|---|---|---|---|
| Objekteigenschaft | Möglich (Z1) | Erreicht (Z2) | |
| Position | 2,0 | 2,0 | Identisch |
| Größe | 4,0 | 4,0 | Identisch |
| Text | 10,0 | 0,0 | BOO 1 und BOO 4 unterschiedlich |
| Reihenfolge | 4,0 | 4,0 | Identisch, beide haben den Index 1 |
| Hierarchie | 8,0 | 8,0 | Identisch, s. o. |
| Vorgängerobjekt | 3,0 | 3,0 | Identisch, beide haben keinen Vorgänger |
| Nächstes Objekt | 3,0 | 0,0 | *BOO 1* hat auf dem UC *BOO 2* als Folgeobjekt, auf dem ZC hat *BOO 4 BOO 1* als Folgeobjekt. |
| Summe: | 34,0 | 21,0 | |
| ÜW: | 62% | | |

### BOO 2:

| | Gewichtungsfaktor | | Erläuterung |
|---|---|---|---|
| Objekteigenschaft | Möglich (Z1) | Erreicht (Z2) | |
| Position | 2,0 | 1,5 | Abweichung in der Vertikalen ca. 50%. Sonst s.o. |
| Größe | 4,0 | 4,0 | Identisch |
| Text | 10,0 | 0,0 | BOO 1 und BOO 2 unterschiedlich |
| Reihenfolge | 4,0 | 2,0 | Unterschiede: Index 1 bzw. Index 3 =4-(3-1)=2. |
| Hierarchie | 8,0 | 8,0 | Identisch, s. o. |
| Vorgängerobjekt | 3,0 | 0,0 | *BOO 1* hat auf dem UC Keinen Vorgänger, auf dem ZC hat *BOO 2 BOO 1* als Vorgänger. |
| Nächstes Objekt | 3,0 | 0,0 | *BOO 1* hat auf dem UC *BOO 2* als Folgeobjekt, auf dem ZC hat *BOO 2 BOO* 3 als Folgeobjekt. |
| Summe: | 34,0 | 15,5 | |
| ÜW: | 45% | | |

### BOO 3:

| | Gewichtungsfaktor | | Erläuterung |
|---|---|---|---|
| Objekteigenschaft | Möglich (Z1 | Erreicht (Z2) | |
| Position | 2,0 | 1,25 | Abweichung in der Vertikalen ca. 75%. Sonst s.o. |
| Größe | 4,0 | 4,0 | Identisch |
| Text | 10,0 | 0,0 | BOO 1 und BOO 3 unterschiedlich |
| Reihenfolge | 4,0 | 1,0 | Unterschiede: Index 1 bzw. Index 4 = 4 - (4-1) = 1. |
| Hierarchie | 8,0 | 0,0 | BOO 2 hat als übergeordnetes Objekt das BOO 2 (zu erkennen an der Einrückung), während das BOO 1 kein übergeordnetes Objekt hat. |
| Vorgängerobjekt | 3,0 | 0,0 | *BOO 1* hat auf dem UC Keinen Vorgänger, uf dem ZC hat *BOO 3 BOO 2* als Vorgänger. |
| Nächstes Objekt | 3,0 | 0,0 | *BOO 1* hat auf dem UC *BOO 2* als Folgeobjekt, auf dem ZC hat *BOO 2* kein Folgeobjekt. |
| Summe: | 34,0 | 6,25 | |
| ÜW: | 18% | | |

Nachdem erfindungsgemäß alle Benutzeroberflächenobjekte der Anwendungssicht auf dem Zielcomputer mit dem aufgezeichneten, gesuchten Benutzeroberflächenobjekt BOO 1 vom Ursprungscomputer verglichen worden sind, sieht die Ergebnisliste EL wie folgt aus:
1. BOO 1: 88% ÜW
2. BOO 4: 62% ÜW
3. BOO 2: 45% ÜW
4. BOO 3: 18% ÜW

Damit wird BOO 1 in der Anwendungssicht bzw. in dem Programmkontext auf dem Zielcomputer als gesuchtes Objekt erfolgreich identifiziert, da der Übereinstimmungswert ÜW mit 88% größer ist als der Schwellenwert SW1 von 70%, sowie der Abstand zwischen dem ersten und dem zweiten Benutzeroberflächenobjekt in der Ergebnisliste mit 26% größer ist als der Schwellenwert SW2 von 5%. Bei einem Wert von 70% für den Schwellenwert SW1 wären die Benutzeroberflächenobjekt BOO 4, BOO 2 und BOO 3 nicht in der Ergebnisliste gespeichert worden und sind hier lediglich zur Verdeutlichung des Beispiels in der Ergebnisliste aufgeführt worden. Allerdings kann der Schwellenwert SW1 auch beim Ermitteln des Benutzeroberflächenobjekts aus der der Ergebnisliste geprüft werden, anstelle ihn vor dem Einfügen der Benutzeroberflächenobjekte in die Ergebnisliste zu prüfen.

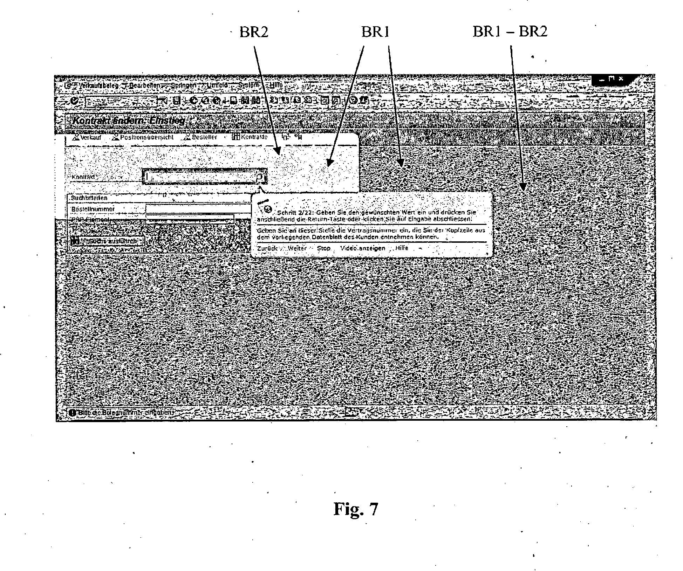

**Fig. 7** zeigt ein Beispiel einer konkreten Bildschirmmaske mit einem hervorgehobenen Bereich, welcher das hervorzuhebende Benutzeroberflächenobjekt enthält.

Das Hervorheben, etwa optische Hervorheben des Benutzeroberflächenobjektes soll dazu dienen, in möglichst kurzer Zeit die Aufmerksamkeit des Benutzers auf einen bestimmten Bildschirmbereich zu lenken und den restlichen Bildschirmbereich visuell in den Hintergrund zu rücken, ohne dabei in die aktive Anwendung eingreifen zu müssen. Hervorgehoben ist in diesem Fall das Benutzerschnittstellenobjekt "Kontrakt". Dadurch, dass der umgebende Bildschirm abgedunkelt ist, treten das entsprechende Eingabefeld sowie dessen unmittelbare Umgebung in den Vordergrund.

**Fig. 8** zeigt ein Ablaufdiagramm für das erfindungsgemäße Hervorheben eines Benutzeroberflächenobjektes an einer Anzeigeeinrichtung (Schritt S6).

Zunächst wird in dem Schritt S6.1 eine Bildschirmkopie in Form eines Bitmaps im Arbeitsspeicher erstellt.

Anschließend wird in dem Schritt S6.2 die Helligkeit des Bitmaps reduziert.

In dem Schritt S6.3 wird ein erstes Bildschirmregionsobjekt BR1 erzeugt, das den gesamten Bildschirm repräsentiert, d.h., sowohl den hervorzuhebenden als auch den abgedunkelten Bereich des Bildschirms.

In dem weiteren Schritt S6.4 wird ein zweites Bildschirmregionsobjekt BR2 erzeugt, das den hervorzuhebenden Bereich repräsentiert. Zum Erzeugen des zweites Bildschirmregionsobjektes BR2 werden die Objekteigenschaften des hervorzuhebenden Benutzeroberflächenobjektes berücksichtigt, insbesondere die Positionen des Benutzeroberflächenobjektes und des dazugehörigen Textes sowie die Ausdehnungen (Höhe und Breite) des Benutzeroberflächenobjektes und des Textes.

Als nächstes wird in dem Schritt S6.5 das zweite Bildschirmregionsobjekt BR2 von dem ersten Bildschirmregionsobjekt BR1 entfernt, etwa durch Subtrahieren von BR2 von BR1.

Schließlich wird in dem Schritt S6.6 ein Fenster erzeugt, welches die Form des ersten Bildschirmregionsobjekt BR1 (d.h., die Form von BR1 - BR2) hat, und an der Anzeigeeinrichtung zur Anzeige gebracht.

**Fig. 9** zeigt ein Ablaufdiagramm für das Validieren einer Benutzereingabe (Schritt S7).

Durch das Validieren von Benutzereingaben wird sichergestellt, dass ein vorbestimmter Weg (Workflow) bei der Ausführung bzw. Bedienung des Computerprogramms eingehalten wird und dass die eingegebenen Daten bestimmten Vorgaben entsprechen. Ferner wird sichergestellt, dass der Benutzer nur die Aktionen und Eingaben (Benutzerinteraktionen) durchführen kann, die im jeweils aktuellen Workflowschritt gemäß dem Prozessschritt vorgesehen sind. Nicht vorgesehene Aktionen können ggf. blockiert werden, sodass sie nicht in bis zum Computerprogramm selbst gelangen können.

Hierzu wird zunächst in dem Schritt S7.1 ein sogenannter Systemhook erzeugt, mit dem alle von einem Benutzer getätigten Eingaben (Mauseingaben, Tastatureingaben oder Eingaben mit sonstigen Eingabemitteln) abgefangen werden, bevor sie zum ausgeführten Computerprogramm weitergeleitet werden. Der Systemhook ist angepasst, die abgefangenen Benutzereingaben zu validieren (Schritte S7.2 und S7.3) und bei einem negativen Ergebnis der Validierung die Benutzereingabe zu verwerfen. Bei einem positiven Ergebnis der Validierung wird die Benutzereingabe an das ausgeführte Computerprogramm weitergeleitet.

Zunächst prüft der Systemhook in dem Schritt S7.2, ob der Aktionstyp (Mauseingabe, Tastatureingabe) der Benutzereingabe dem Aktionstyp entspricht, welcher dem aktuellen Prozessschritt (Benutzerinteraktion des Prozessschrittes) zugeordnet ist.

Sind die Aktionstypen verschieden, wird die Benutzeingabe verworfen und auf die nächste Benutzeingabe gewartet. Zusätzlich kann eine Status- oder Fehlermeldung für den Benutzer ausgegeben werden,

Sind die Aktionstypen hingegen identisch, wird mit dem Schritt S7.3 fortgefahren, in dem die Benutzereingabe validiert wird. Abhängig von Aktionstyp wird in dem Schritt S7.3.1 eine Zeigereingabe (Mauseingabe, Stifteingabe, etc.) oder in dem Schritt S7.3.2 eine Tastatureingabe validiert.

In dem Schritt S7.3.1 (Validierung der Zeigereingabe) wird geprüft, ob die Zeigereingabe, z.B. ein Mausklick auf dem erwarteten Benutzeroberflächenobjekt erfolgt ist. Erfolgte der Zeigereingabe nicht auf dem erwarteten Benutzeroberflächenobjekt, wird die Eingabe verworfen und auf die nächste Benutzereingabe gewartet. Anderenfalls wird die positive Validierung dem Schritt S8 mitgeteilt.

In dem Schritt S7.3.2 (Validierung der Tastatureingabe) wird geprüft, ob der eingegebene Wert einem erwarteten Wert entspricht. Der erwartete Wert kann zusammen mit dem Benutzeroberflächenobjekt in der Navigationsdatei abgespeichert werden. Beispielsweise kann der zu erwartende Wert (oder Wertebereich oder mehrere verschiedene mögliche Werte) als Objekteigenschaft des Benutzeroberflächenobjekt gespeichert werden. Alternativ kann das Tripel, welches den Prozessschritt repräsentiert, um ein Attribut erweitert werden, sodass ein Prozessschritt durch ein 4-Tupel repräsentiert wird. Der bzw. die zu erwartenden bzw. zulässigen Werte können z.B. als reguläre Ausdrücke gespeichert werden. Entspricht der eingegebene Wert dem erwarteten Wert, wird das positive Ergebnis der Validierung dem nachfolgenden Schritt S8 mitgeteilt. Anderenfalls wird die Eingabe verworfen und auf die nächste Benutzeingabe gewartet. Im letzteren Fall kann für den Benutzer eine Status- oder Fehlermeldung ausgegeben werden.

## Patentansprüche

1. Computer-implementiertes Verfahren zur Unterstützung eines Benutzers während einer Bedienung zumindest eines vorbestimmten Computerprogramms, wobei während der Ausführung des Computerprogramms zumindest ein Benutzeroberflächenobjekt des Computerprogramms auf einer Anzeigeeinrichtung zur Anzeige gebracht wird, wobei die Bedienung des Computerprogramms eine Anzahl auszuführender Prozessschritte umfasst, wobei jeder Prozessschritt durch eine vorbestimmte Benutzerinteraktion mit einem vorbestimmten Benutzeroberflächenobjekt (BOO) in einem vorbestimmten Kontext des Computerprogramms repräsentiert wird, wobei eine Navigationsdatei die für die Bedienung des Computerprogramms erforderlichen Benutzerinteraktionen mit dem Computerprogramm enthält, wobei die Benutzerinteraktionen als Prozessschritte in der Navigationsdatei gespeichert sind, und wobei für zumindest einen in der Navigationsdatei gespeicherten Prozessschritt
- der zumindest eine gespeicherte Prozessschrittgeladen wird (S0; S9),
- der aktuelle Kontext des Computerprogramms ermittelt wird (S1),
- geprüft wird, ob der aktuelle Kontext des Computerprogramms mit dem Kontext des geladenen Prozessschrittes übereinstimmt (S2),
- falls der aktuelle Kontext des Computerprogramms mit dem Kontext des geladenen Prozessschrittes übereinstimmt, das an der Anzeigeeinrichtung angezeigte Benutzeroberflächenobjekt des Computerprogramms ermittelt wird, welches dem Benutzeroberflächenobjekt (BOO) des geladenen Prozessschrittes entspricht (S4), und
- das ermittelte Benutzeroberflächenobjekt (BOO) des Computerprogramms auf der Anzeigeeinrichtung für den Benutzer hervorgehoben wird (S6),
**dadurch gekennzeichnet, dass**
das angezeigte Benutzeroberflächenobjekt des Computerprogramms, welches dem Benutzeroberflächenobjekt (BOO) des geladenen Prozessschrittes entspricht, ermittelt wird, indem
- für alle dem aktuellen Kontext des Computerprogramms zugeordneten Benutzeroberflächenobjekte
- ermittelt wird, ob der Objekttyp des angezeigten Benutzeroberflächenobjektes des Computerprogramms mit dem Objekttyp des Benutzeroberflächenobjektes (BOO) des geladenen Prozessschrittes übereinstimmt (S4.1),
- falls die Objekttypen übereinstimmen, ein Übereinstimmungswert (ÜW) für das angezeigte Benutzeroberflächenobjekt des Computerprogramms ermittelt wird (S4.2), wobei der Übereinstimmungswert (ÜW) für ein Benutzeroberflächenobjekt auf Basis der Objekteigenschaften (OE) des Benutzeroberflächenobjektes bestimmt wird, wobei die Objekteigenschaften (OE) des über die Objekterkennungsschnittstelle abgefragten Benutzeroberflächenobjektes (BOO) mit den entsprechenden Objekteigenschaften (OE) des Benutzeroberflächenobjektes (BOO) des geladenen Prozessschrittes verglichen und bewertet werden und das Benutzeroberflächenobjekt des Computerprogramms zusammen mit dem Übereinstimmungswert (ÜW) in einer Ergebnisliste (EL) abgespeichert wird (S4.3), und
- jenes Benutzeroberflächenobjekt aus der Ergebnisliste (EL) ausgewählt wird, welches ein vorbestimmtes Auswahlkriterium erfüllt (S4.4).

2. Verfahren nach Anspruch 1, wobei die auszuführenden Prozessschritte in einer vorbestimmten Reihenfolge in der Navigationsdatei gespeichert sind.

3. Verfahren nach einem der vorhergehenden Ansprüche, wobei, falls der aktuelle Kontext des Computerprogramms nicht mit dem Kontext des geladenen Prozessschrittes übereinstimmt, eine Synchronisierung (SYN) der Navigationsdatei mit dem Computerprogramm durchgeführt wird.

4. Verfahren nach Anspruch 3, wobei beim Synchronisieren (SYN) der Navigationsdatei mit dem Computerprogramm
- der nächste Prozessschritt in der Navigationsdatei ermittelt wird (S2.1), sofern in der Navigationsdatei noch weitere Prozessschritte enthalten sind, und
- geprüft wird, ob der aktuelle Kontext des Computerprogramms mit dem Kontext des nächsten Prozessschrittes in der Navigationsdatei übereinstimmt (S2.2), und, falls der aktuelle Kontext des Computerprogramms nicht mit dem Kontext des nächsten Prozessschrittes in der Navigatiönsdatei übereinstimmt, die Synchronisierung (SYN) der Navigationsdatei mit dem Computerprogramm erneut durchgeführt wird.

5. Verfahren nach einem der vorhergehenden Ansprüche, wobei nach dem Ermitteln (S4) des angezeigten Benutzeroberflächenobjektes des Computerprogramms geprüft wird, ob sich das ermittelte Benutzeroberflächenobjekt (BOO) in einem vorbestimmten Zustand befindet (S5).

6. Verfahren nach einem der vorhergehenden Ansprüche, wobei das Ermitteln (S4.2) des Übereinstimmungswertes (ÜW) zumindest umfasst:
- für alle Objekteigenschaften (OE) des angezeigten Benutzeroberflächenobjektes des Computerprogramms, wobei jeder Objekteigenschaft (OE) ein Gewichtungsfaktor (GF) zugeordnet ist,
- einen ersten Zähler (Z1) um den der Objekteigenschaft (OE) zugeordneten Gewichtungsfaktor (GF) erhöhen (S4.2.1), und
- sofern die Objekteigenschaft (OE) zumindest teilweise mit der Objekteigenschaft (OE) des Benutzeroberflächenobjektes (BOO) des geladenen Prozessschrittes übereinstimmt, einen zweiten Zähler (Z2) anteilig um den der Objekteigenschaft (OE) zugeordneten Gewichtungsfaktor (GF) erhöhen (S4.2.2), und
- den Übereinstimmungswert (ÜW) aus dem Verhältnis des ersten Zählers (Z1) zum zweiten Zähler (Z2) bilden (S4.2.3).

7. Verfahren nach einem der vorhergehenden Ansprüche, wobei das Benutzeroberflächenobjekt (BOO) des Computerprogramms zusammen mit dem Übereinstimmungswert (ÜW) in der Ergebnisliste (EL) abgespeichert wird (S4.3), sofern der ermittelte Übereinstimmungswert (ÜW) größer als ein vorbestimmter erster Schwellenwert (SW1) ist, und wobei die Benutzeroberflächenobjekte in der Ergebnisliste (EL) in einer vorbestimmten Sortierreihenfolge, vorzugsweise absteigend sortiert nach dem Übereinstimmungswert (ÜW), gespeichert werden.

8. Verfahren nach einem der vorhergehenden Ansprüche, wobei das Auswählen (S4.4) des Benutzeroberflächenobjektes aus der Ergebnisliste (EL) zumindest umfasst:
- Prüfen, ob die Ergebnisliste (EL) zumindest ein Benutzeroberflächenobjekt enthält (S4.4.1), und sofern die Ergebnisliste (EL) zumindest ein Benutzeroberflächenobjekt enthält
- Ermitteln einer Differenz (D) zwischen dem Übereinstimmungswert (ÜW) des ersten Benutzeroberflächenobjektes (BOO) und des zweiten Benutzeroberflächenobjektes (BOO) in der Ergebnisliste, sofern die Ergebnisliste (EL) zumindest zwei Benutzeroberflächenobjekte (BOO) enthält (S4.4.2), und
- Prüfen, ob die Differenz (D) einen vorbestimmten zweiten Schwellenwert (SW2) überschreitet (S4.4.3), und
- Auswählen des ersten Benutzeroberflächenobjektes (BOO) aus der Ergebnisliste (EL), sofern die Differenz (D) den zweiten Schwellenwert (SW2) überschreitet oder die Ergebnisliste (EL) genau ein Benutzeroberflächenobjekt (BOO) enthält (S4.4.4).

9. Verfahren nach einem der vorhergehenden Ansprüche, wobei das Hervorheben des ermittelten Benutzeroberflächenobjektes (BOO) des Computerprogramms an der Anzeigeeinrichtung zumindest folgende Schritte umfasst:
- Erzeugen einer Bildschirmkopie der Anzeigeeinrichtung in Form eines Bitmaps (S6.1),
- Reduzieren der Helligkeit des Bitmaps (S6.2),
- Erzeugen eines ersten Bildschirmregionsobjektes (BR1), welches den gesamten Bildschirm repräsentiert (S6.3),
- Erzeugen eines zweiten Bildschirmregionsobjektes (BR2), welches den optisch hervorzuhebenden Bereich des Bildschirms repräsentiert (S6.4),
- Entfernen des zweiten Bildschirmregionsobjektes (BR2) von dem ersten Bildschirmregionsobjekt (BR1) (S6.5), und
- Erzeugen eines Bildschirmfensters, welches der Form des ersten Bildschirmregionsobjekt (BR1) entspricht und Anzeigen des Bildschirmfensters auf der Anzeigeeinrichtung (S6.6).

10. Verfahren nach einem der vorhergehenden Ansprüche, wobei eine Benutzerinteraktion entgegengenommen wird und die entgegengenommene Benutzerinteraktion anhand von Regeln, welche der Benutzerinteraktion des geladenen Prozessschrittes zugeordnet sind, validiert wird (S7), wobei das Entgegennehmen und Validieren (S7) der Benutzerinteraktion zumindest folgende Schritte umfasst:
- Erzeugen eines Systemhooks zum Abfangen von Benutzereingaben, bevor diese an das Computerprogramm weitergegeben werden (S7.1),
- für jede Benutzereingabe, welche von dem Systemhook abgefangen wird
- Überprüfen, ob der Aktionstyp der Benutzereingabe dem Aktionstyp des Prozessschrittes entspricht (S7.2),
- sofern die Aktionstypen einander entsprechen, Validieren der Benutzereingabe (S7.3), wobei bei der Validierung der Benutzereingabe unterschieden wird zwischen einer Zeiger basierten Benutzereingabe und einer Tastatur basierten Benutzereingabe, wobei
- bei einer Zeiger basierten Benutzereingabe überprüft wird, ob die Eingabe von dem Benutzeroberflächenobjekt (BOO) des geladenen Prozessschrittes entgegengenommen wurde (S7.3.1),
- bei einer Tastatur basierten Benutzereingabe überprüft wird, ob der eingegebene Wert den dem geladenen Prozessschritt zugeordneten Eingabevorgaben entspricht (S7.3.2).

11. Verfahren nach einem der vorhergehenden Ansprüche, wobei die Navigationsdatei mit einem Aufzeichnungsmittel auf einer ersten Datenverarbeitungseinrichtung erzeugbar ist und das zu bedienende Computerprogramm auf einer zweiten Datenverarbeitungseinrichtung ausgeführt wird, wobei die Navigationsdatei vor dem Ermitteln (S1) des aktuellen Kontextes des Computerprogramms in einen Arbeitspeicher der zweiten Datenverarbeitungseinrichtung geladen wird.

12. Verfahren nach einem der vorhergehenden Ansprüche, wobei dieses ferner einen Schritt (S3) zum Anzeigen von Informationen zu der von dem Benutzer durchzuführenden Benutzinteraktion auf der Anzeigeeinrichtung umfasst, wobei die Informationen vorzugsweise ein Bild des zu bedienenden Benutzeroberflächenobjektes und einen Beschreibungstext umfassen.

13. System zur Unterstützung eines Benutzers während einer Bedienung zumindest eines vorbestimmten Computerprogramms, wobei das System Mittel zum Ausführen des Computerprogramms, eine Anzeigeeinrichtung zur Anzeige des sich in Ausführung befindlichen Computerprogramms, Eingabemittel zur Entgegennahme von Benutzereingaben, und Navigationsmittel, welche angepasst sind, ein Verfahren nach einem der vorhergehenden Ansprüche auszuführen, umfasst, wobei die Navigationsmittel über zumindest eine Objekterkennungsschnittstelle mit dem Computerprogramm koppelbar sind, um das Computerprogramm entsprechend der in der Navigationsdatei gespeicherten Prozessschritte zu überwachen und zu steuern.

14. Computerprogrammprodukt mit Programmcode, welcher, wenn in eine Datenverarbeitungsanlage geladen, das Verfahren gemäß einem der Ansprüche 1 bis 12 zur Ausführung bringt.

## Claims

1. Computer-implemented method for assisting a user during the operation of at least one predetermined computer program whereby, during the execution of the computer program, at least one user interface object of the computer program is displayed on a display device, whereby the operation of the computer program comprises a number of process steps to be executed, whereby each process step is represented by a predetermined user interaction with a predetermined user interface object (BOO) in a predetermined context of the computer program, whereby a navigation file contains the user interactions with the computer program that are necessary for the operation of the computer program, whereby the user interactions are stored as process steps in the navigation file and whereby, for at least one process step stored in the navigation file,
- the at least one stored process step is loaded (S0; S9),
- the current context of the computer program is determined (S1),
- it is checked whether the current context of the computer program coincides with the context of the loaded process step (S2),
- in case the current context of the computer program coincides with the context of the loaded process step, the one user interface object of the computer program displayed on the display device is determined, that corresponds to the user interface object (BOO) of the loaded process step (S4) and
- the determined user interface object (BOO) of the computer program is accentuated on the display device for the user (S6),
**characterized in that**
the one displayed user interface object of the computer program that corresponds to the user interface object (BOO) of the loaded process step is determined, whereby
- for all the interface user objects associated to the current context of the computer program,
- it is determined, if the object type of the displayed user interface object of the computer program coincides with the object type of the user interface object (BOO) of the loaded process step (S4.1),
- in case the object types coincide, a coincidence value (ÜW) is determined for the displayed user interface object of the computer program (S4.2), whereby the coincidence value (ÜW) is determined for a user interface object on the base of object properties (OE) of the user interface object, whereby the object properties (OE) of the user interface object (BOO) requested over the object recognition interface are compared with the corresponding object properties (OE) of the user interface object (BOO) of the loaded process step and evaluated and the user interface object of the computer program is saved (S4.3) together with the coincidence value (ÜW) in a list of results (EL) and
- the user interface object that fulfills a predetermined selection criterion (S4.4) is selected from the list of results (EL).

2. Method according to claim 1, whereby the process steps to be executed out are stored in a predetermined order in the navigation file.

3. Method according to one of the preceding claims, whereby, in case the current context of the computer program does not coincide with the context of the loaded process step, a synchronization (SYN) of the navigation file is carried out with the computer program.

4. Method according to claim 3, whereby during the synchronization (SYN) of the navigation with the computer program
- the next process step is determined in the navigation file (S2.1) as far as still further process steps are contained in the navigation file and
- it is checked whether the current context of the computer program matches with the context of the next process step in the navigation file (S2.2) and, in case the current context of the computer program does not match with the context of the next process step in the navigation file, the synchronization (SYN) of the navigation file with the computer program is carried out again.

5. Method according to one of the preceding claims, whereby it is checked, after determination (S4) of the displayed user interface object of the computer program, whether the determined user interface object (BOO) is in a predetermined state (S5).

6. Method according to one of the preceding claims, whereby the determination (S4.2) of the coincidence value (ÜW) comprises at least:
- for all object properties (OE) of the displayed user interface object of the computer program, whereby a weighting factor (GF) is associated to each object property,
- to increase a first counter (Z1) by the weighting factor (GF) associated to the object property (OE) (S4.2.1) and,
- as far as the object property (OE) coincides at least partially with the object property (OE) of the user interface object (BOO), to increase a second counter (Z2) proportionately by the weighting factor (GF) associated to the object property (OE) (S4.2.2) and
- forming the coincidence value (ÜW) (S4.2.3) from the ratio of the first counter (Z1) to the second counter (Z2).

7. Method according to one of the preceding claims, whereby the user interface object (BOO) of the computer program is saved (S4.3) together with the coincidence value (ÜW) in the list of results (EL), as far as the determined coincidence value (ÜW) is bigger that a predetermined first threshold value (SW1) and whereby the user interface objects are stored in the list of results (EL) in a predetermined sorting order, preferably in descending order according to the coincidence value (ÜW).

8. Method according to one of the preceding claims, whereby the selection (S4.4) of the user interface object from the list of results (EL) comprises at least:
- verification if the list of results (EL) contains at least one user interface object (S4.4.1) and, as far as the list of results (EL) contains at least one user interface object,
- determination of a difference (D) between the coincidence value (ÜW) of the first user interface object (BOO) and the second user interface object (BOO) in the list of results, as far as the list of results (EL) contains at least two user interface objects (BOO) (S4.4.2) and
- verification if the difference (D) exceeds a predetermined second threshold value (SW2) (S4.4.3) and
- selection of the first user interface object (BOO) from the list of results (EL) as far as the difference (D) exceeds the second threshold value (SW2) or the list of results (EL) contains exactly one user interface object (BOO) (S4.4.4).

9. Method according to one of the preceding claims, whereby the accentuation of the determined user interface object (BOO) of the computer program on the display device comprises at least the following steps:
- production of a screenshot of the display device as a bitmap (S6.1),
- reduction of the brightness of the bitmap (S6.2),
- production of a first screen region object (BR1) that represents the whole screen (S6.3),
- production of a second screen region object (BR2) that represents the region of the screen that has to be optically accentuated (S6.4),
- removal of the second screen region object (BR2) from the first screen region object (BR1) (S6.5) and
- production of a screen window that corresponds to the shape of the first screen region object (BR1) and display of the screen window on the display device (S6.6).

10. Method according to one of the preceding claims, whereby a user interaction is received and the received user interaction is validated (S7) by means of rules that are associated to the user interaction of the loaded process step, whereby the reception and validation (S7) of the user interaction comprises at least the following steps:
- production of a system hook for intercepting user inputs before they are transmitted to the computer program (S7.1),
- for each user input that is intercepted by the system hook
- verification if the action type of the user input corresponds to the action type of the process step (S7.2),
- as far as the action types correspond to each other, validation of the user input (S7.3) whereby, for the validation of the user input, a distinction will be made between a user input based on a pointer and a user input based on a keyboard, whereby
- it is checked for a user input based on a pointer if the input has been received by the user interface object (BOO) of the loaded process step (S7.3.1),
- it is checked for a user input based on a keyboard if the entered value corresponds to the input specifications associated to the loaded process step (S7.3.2).

11. Method according to one of the preceding claims, whereby the navigation file can be produced with a recording means on a first data processing equipment and the computer program to be operated is executed on a second data processing equipment, whereby the navigation file is loaded before the determination (S1) of the current context of the computer program in a working memory of the second data processing equipment.

12. Method according to one of the preceding claims, whereby it further comprises a step (S3) for the display of information to the user interaction to be executed by the user on the display device, whereby the information preferably comprises an image of the user interface object to be operated and a description text.

13. System for assisting a user during the operation of at least one predetermined computer program, whereby the system comprises means for executing the computer program, a display device for displaying the computer program that is being executed, input means for receiving user inputs and navigation means that are adapted to carry out a method according to one of the preceding claims, whereby the navigation means can be coupled to the computer program over at least one object recognition interface in order to monitor and control the computer program according to the process steps stored in the navigation file.

14. Computer program product with program code that executes the method according to one of the claims 1 to 12 when it is loaded in a data processing equipment.

## Revendications

1. Procédé mis en oeuvre par ordinateur pour assister un utilisateur pendant l'utilisation d'au moins un programme informatique prédéterminé, dans lequel, pendant l'exécution du programme informatique, au moins un objet d'interface utilisateur du programme informatique est affiché sur un dispositif d'affichage, l'utilisation du programme informatique comprenant un nombre d'étapes de processus à exécuter, chaque étape de processus étant représentée par une interaction prédéterminée de l'utilisateur avec un objet d'interface utilisateur prédéterminé (BOO) dans un contexte prédéterminé du programme informatique, un fichier de navigation contenant les interactions de l'utilisateur avec le programme informatique nécessaires pour l'utilisation du programme informatique, les interactions de l'utilisateur étant mémorisées comme étapes de processus dans le fichier de navigation et, pour au moins une étape de processus mémorisée dans le fichier de navigation,
- l'étape de processus mémorisée qui existe au moins est chargée (S0 ; S9),
- le contexte actuel du programme informatique est déterminé (S1),
- il est vérifié si le contexte actuel du programme informatique coïncide avec le contexte de l'étape de processus chargée (S2),
- au cas où le contexte actuel du programme informatique coïncide avec le contexte de l'étape de processus chargée, l'objet d'interface utilisateur du programme informatique qui est affiché sur le dispositif d'affichage est déterminé, objet qui correspond à l'objet d'interface utilisateur (BOO) de l'étape de processus chargée (S4) et
- l'objet d'interface utilisateur déterminé (BOO) du programme informatique est accentué (S6) sur le dispositif d'affichage pour l'utilisateur,
**caractérisé en ce que** l'objet d'interface utilisateur affiché du programme informatique qui correspond à l'objet d'interface utilisateur (BOO) de l'étape de processus chargée est déterminé,
- en déterminant pour tous les objets d'interface utilisateur associés au contexte actuel du programme informatique
- si le type d'objet de l'objet d'interface utilisateur affiché du programme informatique coïncide avec le type d'objet de l'objet d'interface utilisateur (BOO) de l'étape de processus chargée (S4.1),
- au cas où les types d'objet coïncident, une valeur de coïncidence (ÜW) est déterminée pour l'objet d'interface utilisateur affiché du programme informatique (S4.2), cependant que la valeur de coïncidence (ÜW) pour un objet d'interface utilisateur est déterminée sur la base des propriétés d'objet (OE) de l'objet d'interface utilisateur, cependant que les propriétés d'objet (OE) de l'objet d'interface utilisateur (BOO) consultées par l'interface de reconnaissance d'objet sont comparées aux propriétés d'objet correspondantes (OE) de l'objet d'interface utilisateur (BOO) de l'étape de processus chargée et évaluées et l'objet d'interface utilisateur du programme informatique est mis en mémoire (S4.3) avec la valeur de coïncidence (ÜW) dans une liste de résultats (EL) et
- l'objet d'interface utilisateur qui remplit un critère de sélection prédéterminé (S4.4) est sélectionné dans la liste de résultats (EL).

2. Procédé selon la revendication 1, les étapes de processus à réaliser étant mémorisées dans un ordre prédéterminé dans le fichier de navigation.

3. Procédé selon l'une des revendications précédentes, dans lequel, au cas où le contexte actuel du programme informatique ne coïncide pas avec le contexte de l'étape de programme chargée, il est effectué une synchronisation (SYN) du fichier de navigation avec le programme informatique.

4. Procédé selon la revendication 3, dans lequel, lors de la synchronisation (SYN) du fichier de navigation avec le programme informatique,
- la prochaine étape de processus est déterminée dans le fichier de navigation (S2.1) dans la mesure où d'autres étapes de processus sont encore contenues dans le fichier de navigation et
- il est vérifié si le contexte actuel du programme informatique coïncide avec la prochaine étape du processus dans le fichier de navigation (S2.2) et, au cas où le contexte actuel du programme informatique ne coïncide pas avec le contexte de la prochaine étape de processus dans le fichier de navigation, la synchronisation (SYN) du fichier de navigation avec le programme informatique est exécutée à nouveau.

5. Procédé selon l'une des revendications précédentes, cependant qu'il est vérifié, après la détermination (S4) de l'objet d'interface utilisateur affiché du programme informatique si l'objet d'interface utilisateur déterminé (BOO) se trouve dans un état prédéterminé (S5).

6. Procédé selon l'une des revendications précédentes, dans lequel la détermination (S4.2) de la valeur de coïncidence (ÜW) comprend au moins :
- pour toutes les propriétés d'objet (OE) de l'objet d'interface utilisateur affiché du programme informatique, un facteur de pondération (GF) étant associé à chaque propriété d'objet (OE),
- un premier compteur (Z1) pour augmenter (S4.2.1) le facteur de pondération (GF) associé à la propriété d'objet (OE) et
- dans la mesure où la propriété d'objet (OE) coïncide au moins partiellement avec la propriété d'objet (OE) de l'objet d'interface utilisateur (BOO) de l'étape de processus chargée, un second compteur (Z2) proportionnellement pour augmenter (S4.2.2) le facteur de pondération (GF) associé à la propriété d'objet (OE) et
- former (S4.2.3) la valeur de coïncidence (ÜW) à partir du rapport du premier compteur (Z1) et du second compteur (Z2).

7. Procédé selon l'une des revendications précédentes, dans lequel l'objet d'interface utilisateur (BOO) du programme informatique est mémorisé (S4.3) avec la valeur de coïncidence (ÜW) dans la liste de résultats (EL) dans la mesure où la valeur de coïncidence déterminée (ÜW) est plus grande qu'une première valeur seuil prédéterminée (SW1) et dans lequel les objets d'interface utilisateur dans la liste de résultats (EL) sont mémorisés dans un ordre de tri prédéterminé, de préférence de tri décroissant selon la valeur de coïncidence (ÜW).

8. Procédé selon l'une des revendications précédentes, dans lequel la sélection (S4.4) de l'objet d'interface utilisateur dans la liste de résultats (EL) comprend au moins :
- la vérification si la liste de résultats (EL) contient au moins un objet d'interface utilisateur (S4.4.1) et, dans la mesure où la liste de résultats (EL) contient au moins un objet d'interface utilisateur,
- détermination d'une différence (D) entre la valeur de coïncidence (ÜW) du premier objet d'interface utilisateur (BOO) et du second objet d'interface utilisateur (BOO) dans la liste de résultats dans la mesure où la liste de résultats (EL) contient (S4.4.2) au moins deux objets d'interface utilisateur (BOO) et
- vérification si la différence (D) dépasse (S4.4.3) une seconde valeur seuil prédéterminée (SW2) et
- sélection du premier objet d'interface utilisateur (BOO) dans la liste de résultats (EL) au cas où la différence (D) dépasse (S4.4.3) une seconde valeur seuil prédéterminée (SW2) ou si la liste de résultats (EL) contient (S4.4.4) exactement un objet d'interface utilisateur (BOO).

9. Procédé selon l'une des revendications précédentes, dans lequel l'accentuation de l'objet d'interface utilisateur déterminé (BOO) du programme informatique sur le dispositif d'affichage comprend au moins les étapes suivantes :
- production d'une copie d'écran du dispositif d'affichage sous forme de bitmap (S6.1),
- réduction de la luminosité du bitmap (S6.2),
- production d'un premier objet de région d'écran (BR1) qui représente tout l'écran (S6.3),
- production d'un second objet de région d'écran (BR2) qui représente la zone de l'écran qui doit être accentuée optiquement (S6.4),
- élimination du second objet de région d'écran (BR2) du premier objet de région d'écran (BR1) (S6.5) et
- production d'une fenêtre d'écran qui correspond à la forme du premier objet de région d'écran (BR1) et affichage de la fenêtre d'écran sur le dispositif d'affichage (S6.6).

10. Procédé selon l'une des revendications précédentes, dans lequel une interaction d'utilisateur est reçue et l'interaction d'utilisateur reçue est validée (S7) à l'aide de règles qui sont associées à l'interaction d'utilisateur de l'étape de processus chargée, dans lequel la réception et la validation (S7) de l'interaction d'utilisateur comprend au moins les étapes suivantes :
- production d'un hook système pour intercepter des entrées d'utilisateur avant qu'elles soient transmises au programme informatique (S7.1),
- pour chaque entrée d'utilisateur qui est interceptée par le hook système
- vérification si le type d'action de l'entrée d'utilisateur correspond au type d'action de l'étape de processus (S7.2),
- dans la mesure où les types d'action correspondent l'un à l'autre, validation de l'entrée d'utilisateur (S7.3), cependant que, lors de la validation de l'entrée d'utilisateur on fait la distinction entre une entrée d'utilisateur basée sur un curseur et une entrée d'utilisateur basée sur un clavier,
- cependant que, pour une entrée d'utilisateur basée sur un curseur, il est vérifié si l'entrée a été reçue (S7.3.1) par l'objet d'interface utilisateur (BOO) de l'étape de processus chargée,
- pour une entrée d'utilisateur basée sur un clavier, il est vérifié si la valeur entrée correspond aux prédéfinitions d'entrée associées à l'étape de processus chargée (S7.3.2).

11. Procédé selon l'une des revendications précédentes, dans lequel le fichier de navigation peut être produit avec un moyen d'enregistrement sur un premier dispositif de traitement de données et le programme informatique à utiliser est exécuté sur un second dispositif de traitement de données, dans lequel le fichier de navigation est chargé, avant la détermination (S1) du contexte actuel du programme informatique, dans une mémoire de travail du second dispositif de traitement de données.

12. Procédé selon l'une des revendications précédentes, dans lequel celui-ci comprend de plus une étape (S3) pour afficher des informations sur l'interaction d'utilisateur à exécuter par l'utilisateur sur le dispositif d'affichage, dans lequel les informations comprennent de préférence une image de l'objet d'interface utilisateur à utiliser et un texte descriptif.

13. Système pour le soutien d'un utilisateur pendant l'utilisation d'au moins un programme informatique prédéterminé, dans lequel le système comprend des moyens pour exécuter le programme informatique, un dispositif d'affichage pour afficher le programme informatique en cours d'exécution, des moyens d'entrée pour la réception d'entrées d'utilisateur et des moyens de navigation qui sont adaptés pour exécuter un procédé selon l'une des revendications précédentes, dans lequel les moyens de navigation peuvent être couplés au programme informatique par au moins une interface de reconnaissance d'objet pour surveiller et commander le programme informatique conformément aux étapes de processus mémorisées dans le fichier de navigation.

14. Produit programme informatique avec code de programme qui, lorsqu'il est chargé dans une installation de traitement de données, met à exécution le procédé selon l'une des revendications 1 à 12.
